(19) **Europäisches Patentamt / European Patent Office / Office européen des brevets**

(11) **EP 4 783 470 A1**

(12) **EUROPEAN PATENT APPLICATION**
published in accordance with Art. 153(4) EPC

(43) Date of publication:
29.07.2026 Bulletin 2026/31

(21) Application number: 24882672.9

(22) Date of filing: 25.09.2024

(51) International Patent Classification (IPC):
$H04B\ 1/401\ ^{(2015.01)}$    $H04B\ 1/44\ ^{(2006.01)}$
$H04B\ 1/04\ ^{(2006.01)}$    $H04B\ 7/06\ ^{(2006.01)}$
$H04M\ 1/02\ ^{(2006.01)}$    $G06F\ 1/16\ ^{(2006.01)}$

(52) Cooperative Patent Classification (CPC):
G06F 1/16; H04B 1/04; H04B 1/401; H04B 1/44;
H04B 7/06; H04M 1/02

(86) International application number:
PCT/KR2024/014465

(87) International publication number:
WO 2025/089643 (01.05.2025 Gazette 2025/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.10.2023 KR 20230144111
05.12.2023 KR 20230174458

(71) Applicant: Samsung Electronics Co., Ltd.
Suwon-si, Gyeonggi-do 16677 (KR)

(72) Inventors:
• KIM, Byungjoon
  Suwon-si, Gyeonggi-do 16677 (KR)

• KANG, Euisung
  Suwon-si, Gyeonggi-do 16677 (KR)
• KIM, Kyuyoung
  Suwon-si, Gyeonggi-do 16677 (KR)
• KIM, Sungsoo
  Suwon-si, Gyeonggi-do 16677 (KR)
• KIM, Yongyoun
  Suwon-si, Gyeonggi-do 16677 (KR)
• KIM, Eungwon
  Suwon-si, Gyeonggi-do 16677 (KR)
• OH, Chanhee
  Suwon-si, Gyeonggi-do 16677 (KR)

(74) Representative: Gulde & Partner
Patent- und Rechtsanwaltskanzlei mbB
Berliner Freiheit 2
10785 Berlin (DE)

(54) **METHOD AND ELECTRONIC DEVICE FOR CONTROLLING COMMUNICATION SIGNAL**

(57) According to various embodiments, a foldable electronic device may comprise: a first housing and a first antenna arranged in an internal space of the first housing; a second housing and a second antenna symmetrically arranged at the position of the first antenna in an internal space of the second housing; a third antenna arranged to have a radiation direction different from the radiation direction of the first antenna in the internal space of the first housing; a hinge device connecting the first housing and the second housing such that folding on a folding axis is possible; a sensor for detecting a first state or a second state of the first housing and the second housing; a switch electrically connected to the first antenna, the second antenna and the third antenna; a processor operatively connected to the sensor and the switch; and a memory for storing instructions. According to one embodiment, when executed by the processor, the instructions can cause the foldable electronic device 200 to: identify the first state of the first housing and the second housing by using the sensor; in the response to the identification of the first state, control the switch such that a communication signal is transmitted on the basis of the first antenna and the second antenna; control the switch such that a communication signal is received on the basis of the third antenna; and perform adjustment such that a first impedance of a first transmission signal transmitted through the first antenna matches a second impedance of a second transmission signal transmitted through the second antenna. Other various embodiments are possible.

**(Cont. next page)**

FIG. 4

## Description

### [Technical Field]

Various embodiments of the present invention relate to a method and an electronic device for controlling a communication signal.

### [Background Art]

Electronic devices are becoming increasingly slimmer to meet consumer purchasing demands as the functional gap between manufacturers narrows significantly. These devices are being improved to increase their rigidity, enhance their design, and differentiate their functional elements. These electronic devices are moving beyond their standard rectangular form factor and evolving into diverse shapes. For example, electronic devices may have a transformable structure that is both convenient to carry and capable of utilizing a large-screen display when in use. These electronic devices may include foldable electronic devices. Foldable electronic devices may require efficient layout design and reliable operation of internal electronic components because of their slimness.

### [Disclosure of Invention]

### [Technical Problem]

The electronic device may include a foldable electronic device comprising a first housing and a second housing foldably connected to the first housing through a hinge device (e.g., a hinge module or hinge assembly). The first housing and the second housing may be structurally coupled by the hinge device, thereby ensuring operational reliability for both the folded state and/or the unfolded state. These foldable electronic devices may operate in an in-folding manner and/or an out-folding manner, as the first housing rotates relative to the second housing over a range of 0 degrees to 360 degrees through the hinge device. The foldable electronic devices may include a flexible display arranged so as to cross the first housing and the second housing in a state opened at approximately 180 degrees.

According to one embodiment, the electronic device may include a plurality of antennas, wherein some of the plurality of antennas can perform TRX (transmit and receive, or transceiver) functions, and the other ones of the plurality of antennas can perform DRX (diversity receive) functions. For example, when the electronic device performs a transmission function using a first antenna among the antennas, the electronic device may perform a reception function using a second antenna among the antennas. The electronic device may perform communication in one of a folded state, an intermediate state, and/or an unfolded state. When the electronic device is in the folded state, the first housing and the second housing may be physically adjacent or placed in contact with each other, and the antennas may be arranged considering interference phenomena resulting from communication performed in the folded state. For example, in the case that a first antenna is arranged along a first edge line of the first housing and a second antenna is arranged along a second edge line of the second housing, when the electronic device is in the folded state, the first edge line and the second edge line may be arranged in a physically adjacent configuration. In this case, the first antenna and the second antenna may be arranged adjacent to each other, and the first communication signal transmitted through the first antenna and the second communication signal transmitted through the second antenna may cause mutual interference. For another example, when the first communication direction corresponding to the first communication signal and the second communication direction corresponding to the second communication signal are opposite to each other, the communication performance (e.g., radiation performance) for the first communication signal and the second communication signal may be relatively significantly degraded.

According to one embodiment, the electronic device may control a switch operatively connected to the antennas such that a communication performance operation (e.g., transmission, reception, TRX operation, DRX operation) on the basis of some antennas among the plurality of antennas is changed in response to a situation in which the electronic device changes from an unfolded state to a folded state. According to one embodiment, the electronic device aims to control the switch such that a communication performance (e.g., radiation performance) corresponding to each of the plurality of antennas is improved in a situation in which the electronic device changes from an unfolded state to a folded state.

The technical problems to be achieved in the present document are not limited to the technical problems mentioned above, and other technical problems not mentioned may be clearly understood by a person skilled in the art to which the present document pertains from the following description.

### [Solution to Problem]

According to various embodiments, a foldable electronic device may comprise: a first housing and a first antenna arranged in an internal space of the first housing; a second housing and a second antenna symmetrically arranged at the position of the first antenna in an internal space of the second housing; a third antenna arranged to have a radiation direction different from the radiation direction of the first antenna in the internal space of the first housing; a hinge device connecting the first housing and the second housing such that folding on a folding axis is possible; a sensor for detecting a first state or a second state of the first housing and the second housing; a switch electrically connected to the first antenna, the second antenna and the third antenna; a processor operatively connected to the sensor and the switch; and a memory for storing instructions. According to one embodiment, when executed by the processor, the instructions may cause the foldable electronic device 200 to: identify the first state of the first housing and the second housing by using the sensor; in the response to the identification of the first state, control the switch such that a communication signal is transmitted on the basis of the first antenna and the second antenna; control the switch such that a communication signal is received on the basis of the third antenna; and perform adjustment such that a first impedance of a first transmission signal transmitted through the first antenna matches a second impedance of a second transmission signal transmitted through the second antenna.

A method for controlling communication signal in a foldable electronic device according to various embodiments may include: identifying a first state of a first housing and a second housing constituting the foldable electronic device; in the response to the identification of the first state, controlling the switch such that a communication signal is transmitted on the basis of a first antenna arranged in an internal space of the first housing and a second antenna symmetrically arranged at the position of the first antenna in an internal space of the second housing; controlling the switch such that a communication signal is received on the basis of a third antenna arranged to have a radiation direction different from the radiation direction of the first antenna in an internal space of the first housing; and performing adjustment such that a first impedance of a first transmission signal transmitted through the first antenna matches a second impedance of a second transmission signal transmitted through the second antenna.

According to various embodiments, a non-transitory computer-readable storage medium (or computer program product) may be described for storing one or more programs for executing a method of controlling communication signals in a foldable electronic device. According to one embodiment, one or more programs, when executed by a processor of an electronic device, may include instructions to perform: identifying a first state of a first housing and a second housing constituting the foldable electronic device; in the response to the identification of the first state, controlling the switch such that a communication signal is transmitted on the basis of a first antenna arranged in an internal space of the first housing and a second antenna symmetrically arranged at the position of the first antenna in an internal space of the second housing; controlling the switch such that a communication signal is received on the basis of a third antenna arranged to have a radiation direction different from the radiation direction of the first antenna in an internal space of the first housing; and performing adjustment such that a first impedance of a first transmission signal transmitted through the first antenna matches a second impedance of a second transmission signal transmitted through the second antenna.

[Advantageous Effects of Invention]

According to various embodiments of the present invention, an electronic device (e.g., a foldable electronic device) may operate in one of a folded state, an intermediate state, and an unfolded state, and in response to the folded state, may control a switch to improve radiation performance for each of a plurality of antennas. For example, when the electronic device is in a folded state, the electronic device may control a switch included in a communication circuit such that a first antenna and a second antenna, which are physically adjacent to each other, have the same impedance. In response to the folded state, the electronic device may control a switch operatively connected to the first antenna and the second antenna such that radiation performance according to communication performance is improved. For example, the first antenna and the second antenna may be controlled to perform the same communication operation (e.g., a transmission operation or a reception operation).

According to one embodiment, the electronic device may perform the same communication operation on the basis of the first antenna and the second antenna in response to the folded state, and the communication efficiency on the basis of the first antenna and the second antenna may be improved. According to one embodiment, the electronic device may, in response to an unfolded state, select at least one antenna from among a plurality of antennas that exhibit relatively superior communication efficiency and perform communication operations on the basis of the at least one selected antenna. According to one embodiment, the electronic device may, in response to a specific state, select an antenna that exhibits relatively superior communication efficiency and provide the user with communication services of superior efficiency.

The effects obtainable from this disclosure are not limited to the effects mentioned above and other effects not mentioned will be readily apparent to those skilled in the art from the description below.

[Brief Description of Drawings]

In connection with the description of the drawings, the same or similar reference numerals may be used for the same or similar components.

> FIG. 1 is a block diagram of an electronic device within a network environment according to one embodiment of the present disclosure.
> FIG. 2a is a perspective view of an electronic device illustrating a flat state or unfolded state according to various embodiments of the present disclosure.
> FIG. 2b is a plan view illustrating the front surface of an electronic device in an unfolded state according to various embodiments of the present disclosure.

FIG. 2c is a plan view illustrating the rear surface of an electronic device in an unfolded state according to various embodiments of the present disclosure.

FIG. 3a is a perspective view of an electronic device illustrating a folded state according to various embodiments of the present disclosure.

FIG. 3b is a perspective view of an electronic device illustrating an intermediate state according to various embodiments of the present disclosure.

FIG. 4 is a diagram illustrating a layout configuration of an electronic device according to various embodiments of the present disclosure.

FIG. 5 is a block diagram of an electronic device according to one embodiment of the present disclosure.

FIG. 6 is a flowchart illustrating a method for controlling a communication signal in response to an electronic device being in a folded state according to one embodiment of the present disclosure.

FIG. 7 is a circuit diagram illustrating a structure in which multiple antennas are operatively connected using a switch according to one embodiment of the present disclosure.

FIG. 8a is a first circuit diagram in which reception operation on the basis of a first antenna and transmission operation on the basis of a second antenna are performed when the electronic device according to one embodiment of the present disclosure is in an unfolded state.

FIG. 8b is a second circuit diagram in which transmission operation on the basis of a first antenna and reception operation on the basis of a second antenna are performed when the electronic device according to one embodiment of the present disclosure is in an unfolded state.

FIG. 8c is a third circuit diagram in which transmission operation on the basis of a first antenna and a second antenna and reception operation on the basis of a third antenna are performed when the electronic device according to one embodiment of the present disclosure is in a folded state.

FIG. 9a is a first circuit diagram in which reception operation on the basis of a first antenna and transmission operation on the basis of a second antenna using a plurality of switches are performed when the electronic device according to one embodiment of the present disclosure is in an unfolded state.

FIG. 9b is a second circuit diagram in which transmission operation on the basis of a first antenna and reception operation on the basis of a second antenna using a plurality of switches are performed when the electronic device according to one embodiment of the present disclosure is in an unfolded state.

FIG. 9c is a third circuit diagram in which transmission operation on the basis of a first antenna and a second antenna and reception operation on the basis of a third antenna using a plurality of switches are performed when the electronic device according to one embodiment of the present disclosure is in a folded state.

FIG. 10 is an example diagram illustrating the current flow when the electronic device according to one embodiment of the present disclosure is in a folded state in a situation where the first impedance corresponding to the first antenna matches the second impedance corresponding to the second antenna.

**[Mode for the Invention]**

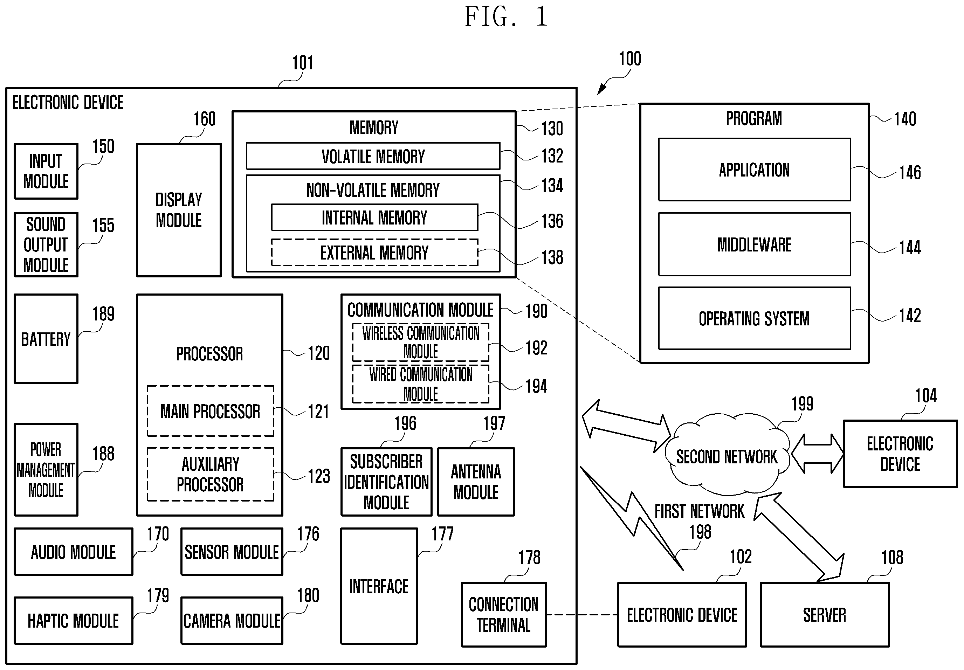

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) (e.g., a speaker or a headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). For example, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mm Wave antenna module. According to an embodiment, the mm Wave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include a patch array antenna and/or a dipole array antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

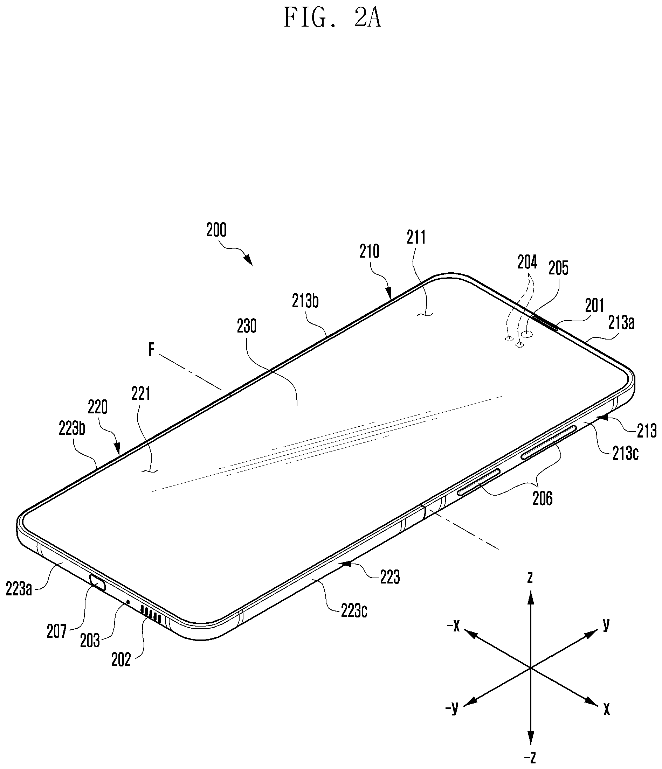

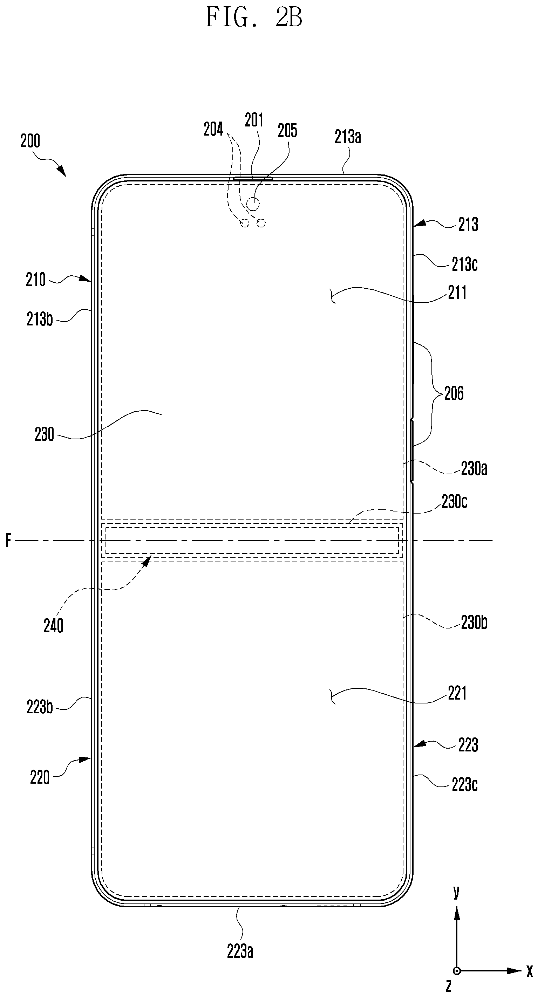

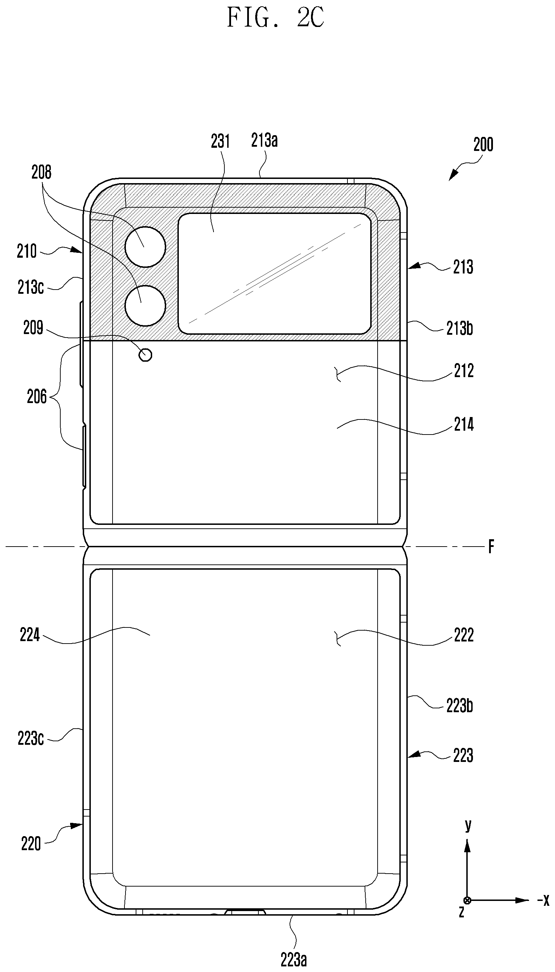

FIG. 2a is a perspective view of an electronic device illustrating a flat state or unfolded state according to various embodiments of the present disclosure. FIG. 2b is a plan view illustrating the front surface of an electronic device in an unfolded state according to various embodiments of the present disclosure. FIG. 2c is a plan view illustrating the rear surface of an electronic device in an unfolded state according to various embodiments of the present disclosure.

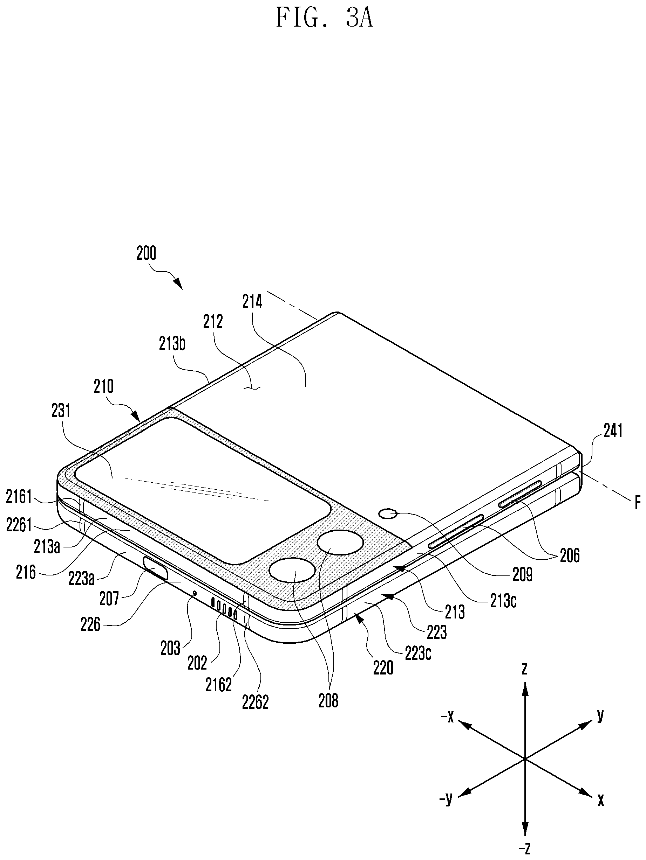

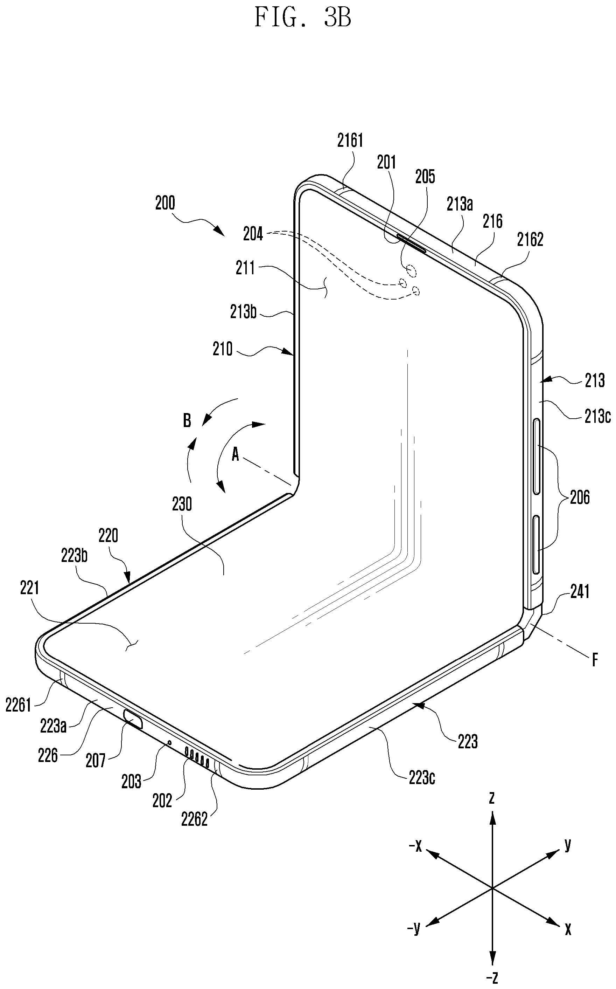

FIG. 3a is a perspective view of an electronic device illustrating a folded state of the electronic device according to various embodiments of the present disclosure. FIG. 3b is a perspective view of an electronic device illustrating an intermediate state of the electronic device according to various embodiments of the present disclosure.

The electronic device 200 illustrated in FIGS. 2a to 3b may be at least partially similar to an electronic device 101, or may further include other embodiments of the electronic device 101.

With reference to FIGS. 2a to 3b, an electronic device 200 (e.g., the electronic device 101 of FIG. 1) may include first and second housings 210 and 220 (e.g., a foldable housing structure) that are foldably coupled to each other on the basis of a hinge device (e.g., the hinge device 240 of FIG. 2b). In one embodiment, the hinge device (e.g., the hinge device 240 of FIG. 2b) may be arranged along the X-axis direction or along the Y-axis direction. In one embodiment, the electronic device 200 may include a first display 230 (e.g., a flexible display, a foldable display, or a main display) that is arranged in an area (e.g., a recess) formed by the first housing 210 and the second housing 220. In one embodiment, the first housing 210 and the second housing 220 may be arranged on opposite sides with respect to the folding axis F and may have a shape that is substantially symmetrical with respect to the folding axis F. In one embodiment, the angle or distance between the first housing 210 and the second housing 220 may vary depending on the state of the electronic device 200. For example, the angle or distance between the first housing 210 and the second housing 220 may vary depending on whether the electronic device 200 is in a flat state or unfolded state, a folded state, or an intermediate state.

In one embodiment, the first housing 210 may include a first surface 211 facing a first direction (e.g., front direction) (z-axis direction) and a second surface 212 facing a second direction (e.g., rear direction) (-z-axis direction) opposite to the first surface 211 in an unfolded state of the electronic device 200. In one embodiment, the second housing 220 may include a third surface 221 facing a first direction (z-axis direction) and a fourth surface 222 facing a second direction (-z-axis direction) in an unfolded state of the electronic device 200. In one embodiment, in an unfolded state of the electronic device 200, the first surface 211 of the first housing 210 and the third surface 221 of the second housing 220 may face substantially the same first direction (z-axis direction). In one embodiment, in a folded state of the electronic device 200, the first surface 211 of the first housing 210 and the third surface 221 of the second housing 220 may face each other. In one embodiment, in an unfolded state of the electronic device 200, the second surface 212 of the first housing 210 and the fourth surface 222 of the second housing 220 may face substantially the same second direction (-z-axis direction). In one embodiment, in a folded state of the electronic device 200, the second surface 212 of the first housing 210 and the fourth surface 222 of the second housing 220 may face opposite directions. For example, in the folded state of the electronic device 200, the second surface 212 may face the first direction (z-axis direction) and the fourth surface 222 may face the second direction (-z-axis direction). In this case, the first display 230 may not be visible from the outside (in-folding manner). In one embodiment, the electronic device 200 may be folded such that the second surface 212 of the first housing 210 and the fourth surface 222 of the second housing 220 face each other. In this case, the first display 230 may be arranged to be visible from the outside (out-folding manner).

According to various embodiments, the first housing 210 (e.g., the first housing structure) may include a first lateral member 213 that at least partially forms an exterior of the electronic device 200 and a first rear cover 214 that is coupled to the first lateral member 213 and forms at least a portion of a second surface 212 of the electronic device 200. In one embodiment, the first lateral member 213 may include a first side surface 213a, a second side surface 213b extending from one end of the first side surface 213a, and a third side surface 213c extending from the other end of the first side surface 213a. In one embodiment, the first lateral member 213 may be formed into a rectangular (e.g., square or rectangular) shape through the first side surface 213a, the second side surface 213b, and the third side surface 213c.

According to various embodiments, the second housing 220 (e.g., the second housing structure) may include a second lateral member 223 that at least partially forms an exterior of the electronic device 200 and a second rear cover 224 that is coupled to the second lateral member 223 and forms at least a portion of a fourth surface 222 of the electronic device 200. In one embodiment, the second lateral member 223 may include a fourth side surface 223a, a fifth side surface 223b extending from one end of the fourth side surface 223a, and a sixth side surface 223c extending from the other end of the fourth side surface 223a. In one embodiment, the second lateral member 223 may be formed into a rectangular shape through the fourth side surface 223a, the fifth side surface 223b, and the sixth side surface 223c.

According to various embodiments, the first housing 210 and the second housing 220 are not limited to the shapes and combinations shown, and may be implemented by other shapes or combinations and/or combinations of parts. In one embodiment, the first lateral member 213 may be formed integrally with the first rear cover 214, and the second lateral member 223 may be formed integrally with the second rear cover 224.

According to various embodiments, in the unfolded state of the electronic device 200, the second side surface 213b of the first lateral member 213 and the fifth side surface 223b of the second lateral member 223 may be connected without a gap. In one embodiment, in the unfolded state of the electronic device 200, the third side surface 213c of the first lateral member 213 and the sixth side 223c of the second lateral member 223 may be connected without a gap. In one embodiment, in the unfolded state of the electronic device 200, the sum of the lengths of the second side surface 213b and the fifth side surface 223b may be configured to be longer than the lengths of the first side surface 213a and/or the fourth side surface 223a. In one embodiment, in the unfolded state of the electronic device 200, the sum of the lengths of the third side surface 213c and the sixth side 223c may be configured to be longer than the lengths of the first side surface 213a and/or the fourth side surface 223a.

With reference to 3a and 3b, the first lateral member 213 and/or the second lateral member 223 may be formed of metal or may further include a polymer that is injected into the metal. In one embodiment, the first lateral member 213 and/or the second lateral member 223 may also include at least one conductive portion 216 and/or 226 that is electrically segmented through at least one segmentation portion 2161, 2162 and/or 2261, 2262 formed of polymer. In such a case, the at least one conductive portion 216 and/or 226 may be used as at least a portion of an antenna that operates in at least one designated band (e.g., a legacy band) by being electrically connected to a wireless communication circuit included in the electronic device 100.

According to various embodiments, the first rear cover 214 and/or the second rear cover 224 may be formed by, for example, at least one or a combination of at least two of coated or colored glass, ceramic, polymer, or metal (e.g., aluminum, stainless steel (STS), or magnesium).

According to various embodiments, the first display 230 may be arranged to extend from a first surface 211 of the first housing 210 across a hinge device (e.g., the hinge device 240 of FIG. 2b) to at least a portion of a third surface 221 of the second housing 220. In one embodiment, the first display 230 may include a first area 230a substantially corresponding to the first surface 211, a second area 230b substantially corresponding to the second surface 212, and a third area 230c (e.g., a bendable area or a folded area) connecting the first area 230a and the second area 230b. In one embodiment, the third area 230c may be arranged at a position corresponding to a hinge device (e.g., the hinge device 240 of FIG. 2b) as a part of the first area 230a and/or the second area 230b. In one embodiment, the electronic device 200 may include a hinge housing 241 (e.g., a hinge cover) that supports the hinge device (e.g., the hinge device 240 of FIG. 2b). In one embodiment, the hinge housing 241 may be arranged so as to be exposed to the outside when the electronic device 200 is in a folded state, and may be inserted into the internal space of the first housing 210 and the internal space of the second housing 220 when the electronic device 200 is in an unfolded state, thereby being invisible from the outside.

According to various embodiments, the electronic device 200 may include a second display 231 (e.g., a sub-display) that is arranged separately from the first display 230. In one embodiment, the second display 231 may be arranged so as to be at least partially exposed on the second surface 212 of the first housing 210. In one embodiment, when the electronic device 200 is in a folded state, the second display 231 may replace at least a portion of the display function of the first display 230 to display at least a portion of the status information of the electronic device 200. In one embodiment, the second display 231 may be arranged so as to be visible from the outside through at least a portion of the first rear cover 214. In one embodiment, the second display 231 may also be arranged on the fourth surface 222 of the second housing 220. In this case, the second display 231 may be arranged so as to be visible from the outside through at least a portion of the second rear cover 224.

According to various embodiments, the electronic device 200 may include at least one of an input device 203 (e.g., a microphone), an audio output device 201 and 202, a sensor module 204, a camera device 205 and 208, a key input device 206, or a connector port 207. In the illustrated embodiment, the input device 203 (e.g., a microphone), an audio output device 201 and 202, a sensor module 204, a camera device 205 and 208, a key input device 206, or a connector port 207 is illustrated as a hole or a circular element formed in the first housing 210 or the second housing 220, but this is an exemplary illustration for description and is not limited thereto. According to various embodiments, the input device 203 may include at least one microphone 203 arranged in the second housing 220. In one embodiment, the input device 203 may include a plurality of microphones 203 arranged to detect the direction of sound. In one embodiment, the plurality of microphones 203 may be arranged at appropriate locations in the first housing 210 and/or the second housing 220. In one embodiment, the audio output device 201 and 202 may include at least one speaker 201 and 202. In one embodiment, the at least one speaker 201 and 202 may include a call receiver 201 arranged in the first housing 210 and a speaker 202 arranged in the second housing 220. In one embodiment, the input device 203, the audio output device 201 and 202, and the connector port 207 may be arranged in a space provided in the first housing 210 and/or the second housing 220 of the electronic device 200, and may be exposed to the external environment through at least one hole formed in the first housing 210 and/or the second housing 220. In one embodiment, the at least one connector port 207 may be used to transmit and receive power and/or data with an external electronic device. In one embodiment, the at least one connector port (e.g., an ear jack hole) may also accommodate a connector (e.g., an ear jack) for transmitting and receiving audio signals with the external electronic device. In one embodiment, the hole formed in the first housing 210 and/or the second housing 220 may be used in common for the input device 203 and the audio output device 201 and 202. In one embodiment, the audio output device 201 and 202 may include a speaker (e.g., a piezo speaker) that is not exposed through a hole formed in the first housing 210 and/or the second housing 220.

According to various embodiments, the sensor module 204 may generate an electrical signal or data value corresponding to an internal operating state of the electronic device 200 or an external environmental state. In one embodiment, the sensor module 204 may detect an external environment through a first surface 211 of the first housing 210. In one embodiment, the electronic device 200 may further include at least one sensor module arranged to detect an external environment through a second surface 212 of the first housing 210. In one embodiment, the sensor module 204 (e.g., an ambient light sensor) may be arranged under the first display 230 to detect an external environment through the first display 230. In one embodiment, the sensor module 204 may include at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, an ambient light sensor, a proximity sensor, a biometric sensor, an ultrasonic sensor, or an ambient light sensor 204.

According to various embodiments, the camera devices 205 and 208 may include a first camera device 205 (e.g., a front camera device) arranged on a first surface 211 of a first housing 210 and a second camera device 208 arranged on a second surface 212 of the first housing 210. In one embodiment, the electronic device 200 may further include a flash 209 arranged near the second camera device 208. In one embodiment, the camera devices 205 and 208 may include at least one lens, an image sensor, and/or an image signal processor. In one embodiment, the camera device 205 and 208 may be arranged such that two or more lenses (e.g., a wide-angle lens, an ultra-wide-angle lens, or a telephoto lens) and two or more image sensors are positioned on one surface of the electronic device 200 (e.g., a first surface 211, a second surface 212, a third surface 221, or a fourth surface 222). In one embodiment, the camera device 205 and 208 may also include lenses and/or image sensors for time of flight (TOF).

According to various embodiments, the key input device 206 (e.g., a key button) may be arranged on the third side surface 213c of the first lateral member 213 of the first housing 210. In one embodiment, the key input device 206 may be arranged on at least one of the other side surfaces 213a and 213b of the first housing 210 and/or the side surfaces 223a, 223b, and 223c of the second housing 220. In one embodiment, the electronic device 200 may not include some or all of the key input devices 206, and the key input devices 206 that are not included may be implemented in another form, such as a soft key, on the first display 230. In one embodiment, the key input device 206 may be implemented using a pressure sensor included in the first display 230.

According to various embodiments, some of the camera devices 205 and 208 (e.g., the first camera device 205) or the sensor module 204 may be arranged to be exposed through the first display 230. In one embodiment, the first camera device 205 or the sensor module 204 may be optically exposed to the outside in the internal space of the electronic device 200 through an opening (e.g., a through-hole) at least partially formed in the first display. In one embodiment, at least a part of the sensor module 204 may be arranged so as not to be visually exposed through the first display 230 in the internal space of the electronic device 200. With reference to FIG. 3b, the electronic device 200 may operate to maintain at least one designated folded angle in an intermediate state through a hinge device (e.g., the hinge device 240 of FIG. 2b). In this case, the electronic device 200 may control the first display 230 such that different contents are displayed on the display area corresponding to the first surface 211 and the display area corresponding to the third surface 221. In one embodiment, the electronic device 200 may be operated in a substantially unfolded state (e.g., the unfolded state of FIG. 2a) and/or a substantially folded state (e.g., the folded state of FIG. 3a) on the basis of a predetermined folded angle (e.g., the angle between the first housing 210 and the second housing 220 when the electronic device 200 is in an intermediate state) through a hinge device (e.g., the hinge device 240 of FIG. 2b). In one embodiment, the electronic device 200 may be operated to transition from an unfolded state at a predetermined folded angle to an unfolded state (e.g., the unfolded state of FIG. 2a) when a pressing force is applied in the unfolded direction (direction A) through a hinge device (e.g., the hinge device 240 of FIG. 2b). In one embodiment, the electronic device 200 may be operated to transition to a folded state (e.g., the folded state of FIG. 3a) when a pressure is applied in the folded direction (direction B) from an unfolded state at a predetermined folded angle through a hinge device (e.g., the hinge device 240 of FIG. 2b). In one embodiment, the electronic device 200 may be operated to maintain an unfolded state (not shown) at various folded angles through a hinge device (e.g., the hinge device 240 of FIG. 2b). (free stop function).

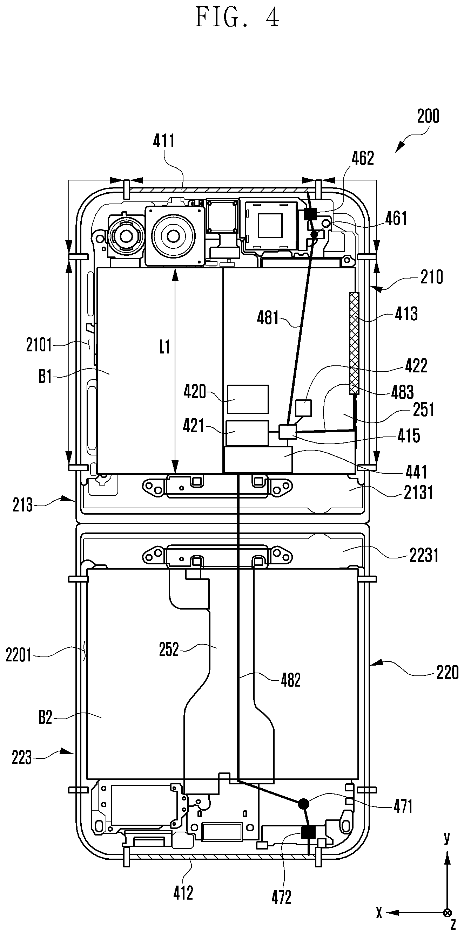

FIG. 4 is a diagram illustrating a layout configuration of an electronic device according to various embodiments of the present disclosure.

FIG. 4 is a diagram illustrating the rear surface of an electronic device 200 with a first rear cover (e.g., the first rear cover 214 of FIG. 2c) and a second rear cover (e.g., the second rear cover 224 of FIG. 2c) including a second display (e.g., the second display 231 of FIG. 2c) removed.

With reference to FIG. 4, the electronic device 200 may include a first housing 210 including a first lateral member 213 (e.g., a first side frame or a first side bezel), a second housing 220 foldably connected to the first housing 210 through a hinge device (e.g., the hinge device 240 of FIG. 2b) and including a second lateral member 223 (e.g., a second side frame or a second side bezel), and a first display 230 (e.g., a flexible display) arranged to be supported by the first housing 210 and the second housing 220. In one embodiment, the electronic device 200 may include a first support member 2131 (e.g., a first support plate) extending at least partially from a first lateral member 213 into a first space 2101, and a second support member 2231 (e.g., a second support plate) extending at least partially from a second side member 223 into a second space 2201.

According to various embodiments, the electronic device 200 may include a first substrate 251 arranged in a first space 2101 and a first battery B1 arranged on one side of the first substrate 251. For example, the first substrate 251 may be arranged in a form adjacent to one surface within the first space 2101 and the first battery B1 may be arranged in a form adjacent to the other surface opposite to the one surface within the first space 2101. In one embodiment, the first substrate 251 may be arranged to have a length in the vertical direction (e.g., y-axis direction) of the first housing 210 and may extend to the vicinity of the hinge device (e.g., the hinge device 240 in FIG. 2b) in the first housing 210. In one embodiment, the first battery B1 may be arranged parallel to the first substrate 251. In one embodiment, the first battery B1 may be arranged so as not to overlap the first substrate 251 when the first display 230 is viewed from above in an unfolded state. The first substrate 251 and the first battery B1 may be arranged in a form physically adjacent to each other along a specific edge line without overlapping each other. In one embodiment, the first battery B1 may be implemented in various shapes and sizes depending on the arrangement structure of internal components. For example, the first battery B1 may have a size corresponding to the first length L1 in the vertical direction (e.g., y-axis direction) of the electronic device. According to one embodiment, the first substrate 251 and the first battery B1 may be arranged in a form deposited on the top of the first support member 2131 (e.g., the first support plate).

According to various embodiments, the electronic device 200 may include a second support member 2231 (e.g., a second support plate) arranged in a second space 2201, a second battery B2 arranged in a form deposited on the upper end of a second support member 2231, and a second substrate 252 arranged in a form at least partially surrounding the second battery B2. In one embodiment, the second substrate 252 may be arranged to have a length in the longitudinal direction (e.g., y-axis direction) of the second housing 220, and may extend to the vicinity of a hinge device (e.g., the hinge device 240 of FIG. 2b) in the second housing 220. For example, the second substrate 252 may include a flexible printed circuit board (FPCB). In one embodiment, the second substrate 252 may be arranged to electrically connect a portion of the first substrate 251 adjacent to the hinge device (e.g., the hinge device 240 of FIG. 2b) and a portion of the second substrate 252 adjacent to the hinge device (e.g., the hinge device 240 of FIG. 2b) to each other, thereby being applied to have the shortest length, which can help slim down the electronic device 200. In one embodiment, the second battery B2 may be arranged in a form that at least partially overlaps the second substrate 252 when the first display 130 is viewed from above in an unfolded state. According to another embodiment, the second battery B2 may also be distinguished by a third battery and a fourth battery arranged on one surface with respect to the second substrate 252. For example, the third battery and the fourth battery may have different sizes.

According to one embodiment, the batteries B1 and B2 may help secure the capacity through an efficient layout design that takes into account surrounding electronic components within a limited space of the electronic device 200.

According to one embodiment, the first substrate 251 included in the first housing 210 may include a processor 420, a transmission module 421, a reception module 422, a switch 415, and a connecting member 441 (e.g., a connector-to-connector (CTC) flexible printed circuit board (FPCB)). For example, the transmission module 421 may at least partially amplify and transmit a transmission signal to be transmitted to a communication network. The transmission module 421 may include a low noise amplifier and power amplifier module integrated duplex (LPAMID) implemented on the basis of a power amplifier (PA), a switch, a filter, and/or a low noise amplifier (LNA). For example, the reception module 422 may receive a reception signal transmitted from a communication network. The reception module 422 may include a low noise amplifier integrated front end module (LFEM) implemented on the basis of a radio frequency (RF) filter, switch and/or low noise amplifier (LNA). For example, the connecting member 441 may connect two connectors (e.g., signal paths) to each other and may include a flexible printed circuit board (FPCB) operatively connected to the second substrate 252. For example, the processor 420 may control the operation and function of each of the components constituting the electronic device 200. The transmission module 421 may control an operation related to transmitting a communication signal, and the reception module 422 may control an operation related to receiving a communication signal. The switch 415 may be operatively connected to a transmission module 421, a reception module 422, a connecting member 441, and/or a plurality of antennas (e.g., the first antenna 411, the second antenna 412, and the third antenna 413).

According to one embodiment, each of a transmission module 421 and a reception module 422 may be operatively connected to a plurality of antennas (e.g., the first antenna 411, the second antenna 412, and the third antenna 413) through a switch 415. According to one embodiment, an RF switch 461 and a phase shifter 462 may be positioned between the switch 415 and the first antennas 411. For example, the RF switch 461 and the phase shifter 462 may be mounted so as to be physically adjacent to the antenna 411. According to one embodiment, a connecting member 441, a second substrate 252 electrically connected to the connecting member 441, an RF switch 471 and a filter 472 (e.g., a tuner) may be positioned between the switch 415 and the second antenna 412. In one embodiment, the switch 415 and the third antenna 413 may be positioned (adjacent to each other) within a specified distance. According to one embodiment, the switch 415 may be arranged such that the first electrical loss amount of the first path 481 connected to a first antenna 411 and the second electrical loss amount of the second path 482 connected to a second antenna 412 are similar. For example, the position of the switch 415 may be determined such that the first length corresponding to the first path 481 and the second length corresponding to the second path 482 are similar. According to one embodiment, the switch 415 may be arranged adjacent to the transmission module 421, the reception module 421, and the connecting member 421 to reduce the electrical loss.

According to one embodiment, the first antenna 411 may be implemented on the basis of a conductive member at least partially arranged on the edge of the first housing 210. According to one embodiment, the second antenna 412 may be implemented on the basis of a conductive member at least partially arranged on the edge of the second housing 220. The first antenna 411 and the second antenna 412 may be arranged symmetrically to each other. For example, when the electronic device 200 is in a folded state, the first antenna 411 and the second antenna 412 may be arranged in a form physically adjacent to each other. In the folded state, the first housing 210 and the second housing 220 may be in a folded state each other on the basis of the hinge device 240 and the edge area of the first housing 210 and the edge area of the second housing 220 may be in a physically adjacent state. According to one embodiment, since the first antenna 411 and the second antenna 412 are arranged physically adjacent, the first communication signal on the basis of the first antenna 411 and the second communication signal on the basis of the second antenna 412 may cause interference between each other.

According to one embodiment, when the electronic device 200 is in an unfolded state, the transmission operation and the reception operation may be performed alternately on the basis of the first antenna 411 and the second antenna 412. For example, when the transmission module 421 performs a transmission operation on the basis of the first antenna 411, the reception module 422 may perform a reception operation on the basis of the second antenna 412. When a transmission operation is performed on the basis of the first antenna 411, the electronic device 200 may control a switch 415 such that a transmission module 421 can be electrically connected to the first antenna 411. When a reception operation is performed on the basis of the second antenna 412, the electronic device 200 may control a switch 415 such that a reception module 422 can be electrically connected to the second antenna 412. According to one embodiment, in the unfolded state, the electronic device 200 may control communication operations (e.g., transmission operation and reception operation) for each antenna to implement optimal communication performance (e.g., radiation performance) on the basis of the first antenna 411 and the second antenna 412.

According to one embodiment, in a folded state, the first antenna 411 and the second antenna 412 may be physically arranged adjacent to each other and the electronic device 200 may perform a transmission operation on the basis of the first antenna 411 and the second antenna 412. For example, the electronic device 200 may adjust the impedance for each antenna such that the first impedance corresponding to the first antenna 411 substantially matches the second impedance corresponding to the second antenna 412. For example, the electronic device 200 may control to perform a transmission operation by integrating the first antenna 411 and the second antenna 412 into one antenna. When the first impedance and the second impedance are adjusted to be the same, the electronic device 200 may generate a communication signal with relatively improved radiation performance on the basis of the first antenna 411 and the second antenna 412. According to one embodiment, the electronic device 200 may generate a communication signal with improved radiation performance responding to the folded state on the basis of a plurality of antennas (e.g., the first antenna 411 and the second antenna 412). For example, when, in the folded state, the transmission module 421 performs a transmission operation by being operatively connected to the first antenna 411 and the second antenna 412, the reception module 422 may be operatively connected to the third antenna 413 through the switch 415. In the folded state, the reception module 422 may perform a reception operation on the basis of the third antenna 413.

According to one embodiment, the electronic device 200 (e.g., the foldable electronic device) may select at least one antenna to implement optimal communication performance according to the state of the electronic device 200 (e.g., folded state, an unfolded state) and may perform a communication operation on the basis of the at least one selected antenna. The electronic device 200 may provide an optimal communication service to the user according to the state of the electronic device 200 (e.g., folded state, unfolded state).

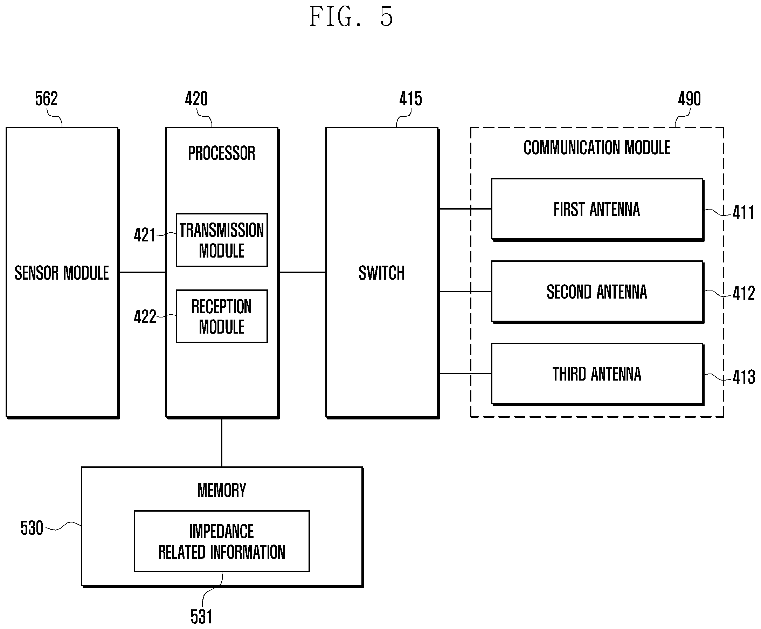

FIG. 5 is a block diagram of an electronic device according to one embodiment of the present disclosure.

The electronic device 200 of FIG. 5 may be at least partially similar to the electronic device 101 of FIG. 1 and/or the electronic device 200 of FIG. 2a, and may further include other embodiments of the electronic device 101.

With reference to FIG. 5, the electronic device 200 may include a first housing (e.g., the first housing 210 of FIG. 2a), a first antenna 411 (e.g., the first antenna 411 of FIG. 4) and a third antenna 413 (e.g., the third antenna of FIG. 4) arranged in the internal space of the first housing 210, a second housing (e.g., the second housing of FIG. 2a), a second antenna 412 (e.g., the second antenna 412 of FIG. 4) arranged in the internal space of the second housing 220, and a hinge device (e.g., the hinge device 240 of FIG. 2) with the first housing 210 and the second housing 220 being foldably connected each other with respect to the folding axis (e.g., the F of FIG. 2a).

With reference to FIG. 5, the electronic device 200 may include a processor 420 (e.g., the processor 120 of FIG. 1, the processor 420 of FIG. 4), a memory 530 (e.g., the memory 130 of FIG. 1), a sensor module 562 (e.g., the sensor module 176 of FIG. 1), a switch 415 (e.g., the switch 415 of FIG. 4), and a communication module 490 (e.g., the communication module 190 of FIG. 1).

According to one embodiment, the processor 420 may include a transmission module 421 for controlling a transmission operation of a communication signal and a reception module 422 for controlling a reception operation of the communication signal. The sensor module 562 may include a sensor for distinguishingly detecting an unfolded state, an intermediate state, and a folded state of the electronic device 200. For example, the sensor module 562 may include at least one of a proximity sensor, a 6-axis sensor, a gyro sensor and an acceleration sensor. The memory 530 may store impedance-related information 531 related to the impedance of a communication signal. The communication module 490 may include a communication circuit for performing a communication operation in the electronic device 200, and a plurality of antennas (e.g., the first antenna 411 of FIG. 4), the second antenna 412 (e.g., the second antenna 412 of FIG. 4), the third antenna 413 (e.g., the third antenna 413 of FIG. 4)).

According to one embodiment, the processor 420 of the electronic device 200 may execute a program (e.g., the program 140 of FIG. 1) stored in the memory 530 to control at least one other component (e.g., hardware and/or software component) and perform various data processing or calculations. For example, the processor 420 may use the sensor module 562 to identify the state of the electronic device 200 (e.g., folded state, unfolded state, intermediate state) and select at least one antenna to perform a communication operation according to a specific state. On the basis of the identified state, the processor 420 may control communication operations (e.g., transmission operations, reception operations) for a plurality of antennas (e.g., the first antenna 411, the second antenna 412, the third antenna 413) to provide an optimal communication service to the user. According to one embodiment, the processor 420 may be operatively, functionally and/or electrically connected to the memory 530, the sensor module 562, the switch 415 and/or the communication module 490.

According to one embodiment, the processor 420 may include a transmission module 421 (e.g., the transmission module 421 of FIG. 4) for controlling the transmission operation of the electronic device 200 and a reception module 422 (e.g., the reception module 422 of FIG. 4) for controlling the reception operation of the electronic device 200. According to one embodiment, the transmission module 421 and the reception module 422 may be electrically connected to at least one of a plurality of antennas (e.g., the first antenna 411, the second antenna 412, the third antenna 413) through a switch 415 and may perform a communication operation on the basis of the connected antenna. For example, when the transmission module 421 is connected to the first antenna 411 through the switch 415, the transmission module 421 may perform a transmission operation for a communication signal through the switch 415 on the basis of the first antenna 411. For another example, when the reception module 422 is connected to the second antenna 412 through the switch 415, the reception module 422 may perform a reception operation for a communication signal on the basis of the second antenna 412.

According to one embodiment, the memory 530 may store information related to the impedance of the communication signal (e.g., an impedance-related information 531) in relation to transmission /reception of the communication signal. For example, the processor 420 may adjust the impedance of the communication signal on the basis of the impedance-related information 531 when performing a transmission operation for the communication signal. According to one embodiment, the processor 420 may adjust the impedance such that the first impedance corresponding to the first antenna 411 matches the second impedance corresponding to the second antenna 412 when performing a transmission operation by integrating the first antenna 411 and the second antenna 412. For example, the processor 420 may adjust the impedance such that the first impedance of the first communication signal by the first antenna 411 substantially matches the second impedance of the second communication signal by the second antenna 412. The processor 420 may adjust the impedance of the communication signal corresponding to each antenna on the basis of the impedance-related information 531.

According to one embodiment, the sensor module 562 may include a sensor for detecting the status of the electronic device 200 and may implement on the basis of at least one of a proximity sensor, a 6-axis sensor, a gyro sensor and an acceleration sensor. For example, the processor 420 may detect the unfolded state, the intermediate state, and the folded state of the electronic device 200 by using the sensor module 562. According to one embodiment, the processor 420 may select at least one antenna to implement optimal communication performance according to the state (e.g., folded state, unfolded state, intermediate state) of the electronic device 200.

According to one embodiment, when the electronic device 200 is in an unfolded state and/or an intermediate state, the processor 420 may perform the transmission operation and reception operation alternately on the basis of the first antenna 411 and the second antenna 412. For example, when a transmission operation is performed on the basis of the first antenna 411, the electronic device 200 may control the switch 415 such that the transmission module 421 is electrically connected to the first antenna 411. When a reception operation is performed on the second antennas 412, the electronic device 200 may control the switch 415 such that the reception module 422 is electrically connected to the second antenna 412.

According to one embodiment, when the electronic device 200 is in a folded state, the first antenna 411 and the second antenna 412 may be physically arranged adjacent to the processor 420, and the processor 420 may control the switch 415 so as to perform a transmission operation by integrating the first antenna 411 and the second antenna 412 into one antenna. According to one embodiment, the processor 420 may control the switch 415 such that, when performing the communication operation by integrating the first antenna 411 and the second antenna 412, the transmission module 421 can be operatively connected to the first antenna 411 and the second antenna 412 together. The processor 420 may control the impedance such that the first impedance corresponding to the first antenna 411 matches the second impedance corresponding to the second antenna 412. According to one embodiment, performing a single communication operation (e.g., a transmission operation) on the basis of a plurality of antennas (e.g., the first antenna 411 and the second antenna 412) may improve the communication performance (e.g., radiation performance) associated with the transmission operation.

According to one embodiment, the communication module 490 may include a plurality of antennas (e.g., a first antenna 411, a second antenna 412, a third antenna 413) operatively connected to the switch 415, and may include a communication circuit to which the plurality of antennas are connected. For example, each of the plurality of antennas may be implemented as a conductive member formed in the housing (e.g., the first housing 210 or the second housing 220 of FIG. 4) of the electronic device 200, a conductive member formed on a substrate (e.g., the first substrate 251 of FIG. 4) arranged in the internal space of the electronic device 200, or a radiator formed of a conductive pattern.

According to one embodiment, an RF switch (e.g., the RF switch 461 of FIG. 4) and a phase shifter (e.g., the phase shifter 462 of FIG. 4) may be positioned between the switch 415 and the first antenna 411. For example, the RF switch 461 and the phase shifter 462 may be mounted so as to be physically adjacent to the first antenna 411. According to one embodiment, a connecting member (e.g., the connecting member 441 of FIG. 4), a second substrate (e.g., the second substrate 252 of FIG. 4) electrically connected to the connecting member 441, an RF switch (e.g., the RF switch 471 of FIG. 4), a filter (e.g., the filter 423 of FIG. 4), and a tuner may be positioned between the switch 415 and the second antenna 412. According to one embodiment, a switch 415 and a third antennas 413 may be arranged to be positioned (adjacent to each other) within a specified distance. According to one embodiment, the position of the switch 415 may be determined to be adjacent to the transmission module 421, the reception module 422, and the connecting member 441 such that the electrical loss for each of the plurality of antennas is minimized.

According to one embodiment, an electronic device 200 (e.g., the foldable electronic device) may select at least one antenna to implement optimal communication performance according to the state of the electronic device 200 (e.g., folded state, unfolded state), and may perform a communication operation on the basis of the at least one selected antenna. The electronic device 200 may provide an optimal communication service to the user according to the state of the electronic device 200 (e.g., folded state, unfolded state).

According to various embodiments, a foldable electronic device (e.g., the electronic device 101 of FIG. 1 and/or the electronic device 200 of FIG. 2a) may include a first housing 210 and a first antenna 411 arranged in the internal space of the first housing 210, a second housing 220 and a second antenna 412 arranged symmetrically to the position of the first antenna 411 in the internal space of the second housing 220, a third antenna 413 arranged to have a radiation direction different from the radiation direction of the first antenna 411 in the internal space of the first housing 210, a hinge device 240 connecting the first housing 210 and the second housing 220 so as to be foldable on the basis of a folding axis, a sensor 562 for detecting a first state or a second state of the first housing 210 and the second housing 220, a switch electrically connected to the first antenna 411, the second antenna 412, and the third antenna 413, and a processor 420 operatively connected to the sensor 562 and the switch 415. According to one embodiment, the processor 420 may use the sensor 562 to identify the first state for the first housing 210 and the second housing 220. The processor 420, in response to the identification of the first state, may control the switch 415 such that a communication signal is transmitted on the basis of the first antenna 411 and the second antenna 412. The processor 420 may control the switch 415 such that a communication signal is received on the basis of the third antenna 413. The processor 420 may perform adjustment such that the first impedance of the first transmission signal transmitted through the first antenna 411 matches the second impedance of the second transmission signal transmitted through the second antenna 412.

According to one embodiment, the processor 420 may transmit the first transmission signal and the second transmission signal of which impedance is corrected on the basis of the configured frequency band.

The foldable electronic device 200 according to one embodiment may further include at least one capacitor and at least one inductor arranged between the switch 415 and the first antenna 411. The processor 420 may adjust the first impedance for the first transmission signal transmitted through the first antenna 411 on the basis of the at least one capacitor and the at least one inductor.

The foldable electronic device 200 according to one embodiment may further include at least one capacitor and at least one inductor arranged between the switch 415 and the second antenna 412. The processor 420 may adjust the second impedance for the second transmission signal transmitted through the second antenna 412 on the basis of the at least one capacitor and the at least one inductor.

The foldable electronic device 200 according to one embodiment may further include a phase shifter 462 arranged between the first antenna 411 and the switch 415. The processor 420 may use the phase shifter 462 to adjust the phase of the first transmission signal transmitted through the first antenna 411 on the basis of the second transmission signal transmitted through the second antenna 412.

The foldable electronic device 200 according to one embodiment may further include a filter 472 arranged between the second antenna 412 and the switch 415. The processor 420 may use the filter 472 to adjust the RF power of the second transmission signal corresponding to the second antenna 412 on the basis of the first transmission signal corresponding to the first antenna 411.

According to one embodiment, the processor 420 may use the sensor 562 to identify a second state for the first housing 210 and the second housing 220. The processor 420, in response to the identification of the second state, may select at least one antenna among the first antenna 411 and the second antenna 412. The processor 420 may control the switch 415 such that the communication signal is transmitted on the basis of the at least one selected antenna.

The foldable electronic device 200 according to one embodiment may further include a grip sensor for detecting whether a user grips the foldable electronic device 200. The processor 420 may identify the posture of the foldable electronic device 200 on the basis of the grip sensor and the sensor 562. The processor 420 may adjust the amount of power supplied to at least one of the first antenna 411 and the second antenna 412 on the basis of the identified posture.

The foldable electronic device 200 according to one embodiment may further include a first switch 910 electrically connecting the first antenna 411, the second antenna 412 and the processor 420, and a second switch 920 electrically connecting the third antenna 413 and the processor 420. The processor 420 may control the first switch 910 such that a communication signal is transmitted on the basis of the first antenna 411 and the second antenna 412. The processor 420 may control the second switch 920 such that a communication signal is received on the basis of the third antenna 413.

According to one embodiment, the switch 415 may be positioned within the internal space of the first housing 411 such that the power loss of the first communication signal transmitted through the first antenna 411 matches the power loss of the second communication signal transmitted through the second antenna 412, and the distance from the third antenna 413 is within a specified distance.

The foldable electronic device 200 according to one embodiment may further include a first RF filter 461 arranged adjacently within a specified distance on the basis of the position of the first antenna 411 and a second RF filter 471 arranged adjacently within a specified distance on the basis of the position of the second antenna 412. The processor 420 may identify the first RF power for the first communication signal transmitted through the first antenna 411 on the basis of the first filter 461. The processor 420 may identify the second RF power for the second communication signal transmitted through the second antenna 412 on the basis of the second filter 471.

According to one embodiment, the first state may include a folded state in which the first housing 210 and the second housing 220 are completely folded relative to each other with respect to the folding axis. The second state may include an unfolded state or an intermediate state in which the first housing 210 and the second housing 220 are not completely folded relative to each other.

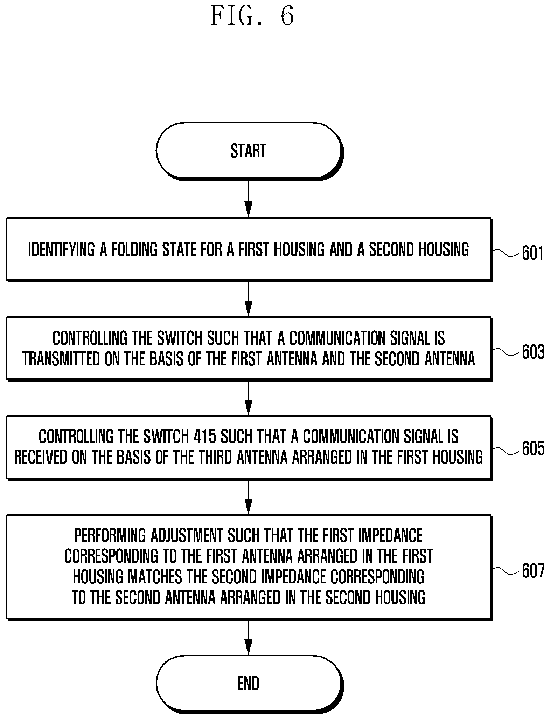

FIG. 6 is a flowchart illustrating a method for controlling a communication signal in response to an electronic device being in a folded state according to one embodiment of the present disclosure.

In the following embodiments, the operations may be performed sequentially, but are not necessarily sequential. For example, the order of the operations may be changed, and at least two operations may be performed in parallel.

According to one embodiment, the operation of FIG. 6 (e.g., operation 601 to operation 607) may be understood to be performed in a processor (e.g., the processor 120 of FIG. 1 and the processor 420 of FIG. 4) of an electronic device 200 of FIG. 2a.

The electronic device 200 of FIG. 6 may be at least partially similar to the electronic device 200 of FIGS. 2a to 5, or may further include other embodiments of the electronic device. The electronic device 200 may include a foldable electronic device including a plurality of housings (e.g., the first housing 210 and the second housing 220 of FIG. 2a).

According to one embodiment, the electronic device 200 may include a foldable electronic device including a first housing 210, a hinge device (e.g., the hinge device 240 of FIG. 2b) connected to one end of the first housing, and a second housing foldably connected to the first housing 210 through the hinge device 240. For example, the hinge device 240 may be arranged between the first housing 210 and the second housing 220 and may be structurally coupled with the first housing 210 and the second housing 220.

With reference to FIG. 6, the electronic device 200 may include a sensor module (e.g., the sensor module 562 of FIG. 5) for detecting the state of the electronic device 200 (e.g., folded state, unfolded state, intermediate state) and may include a plurality of antennas (e.g., the first antenna 411 (e.g., the first antenna 411 of FIG. 4), the second antenna 412 (e.g., the second antenna 412 of FIG. 4), the third antenna 413 (e.g., the third antenna 413 of FIG. 4)) included in at least one of the first housing 210 and the second housing 220.

In operation 601, the processor 420 may use the sensor module 562 to identify the folding state (e.g., the folded state of the electronic device 200) for the first housing 210 and the second housing 220. For example, the processor 420 may distinguish and detect one of the folded state, the unfolded state, and the intermediate state for the electronic device 200, and may identify whether the electronic device 200 maintains the folded state. For example, the processor 420 may determine that the electronic device 200 is in the folded state when the electronic device 200 maintains the folded state for a specified time.

In operation 603, the processor 420 may control the switch 415 so as to transmit a communication signal on the basis of the first antenna 411 and the second antenna 412. For example, the processor 420 may may control the switch 415 such that the transmission module (e.g., the transmission module 421 of FIG. 5) is operatively connected to the first antenna 411 and the second antenna 412 together. For example, the first antenna 411 may be arranged in the internal space of the first housing 410, and the second antenna 411 may be arranged symmetrically to the position of the first antenna 411 in the internal space of the second housing 420. For example, when the electronic device 200 is in a folded state, the first antenna 411 and the second antenna 412 may be arranged in a physically adjacent state. The first antenna 411 and the second antenna 412 may be arranged adjacent to each other within a specified distance. The transmission module 421 may perform a transmission operation for a communication signal on the basis of the first antenna 411 and the second antenna 412.

According to one embodiment, when the electronic device 200 is in a folded state, the first antenna 411 and the second antenna 412 may be physically arranged adjacently, and when the first antenna 411 and the second antenna 412 are integrated into one antenna, the communication performance (e.g., radiation performance) of a communication signal on the basis of the integrated antenna may be improved. For example, an operation in which the first antenna 411 and the second antenna 412 are integrated into one antenna and communicate may, as described for operation 607, include an operation of adjusting the impedance for each communication signal (e.g., the first communication signal through the first antenna 411 and the second communication signal through the second antenna 412) such that the first impedance corresponding to the first antenna 411 matches the second impedance corresponding to the second antenna 412. According to one embodiment, when the electronic device 200 is in a folded state, the processor 120 of the electronic device 200 may adjust the impedance of each communication signal such that the first communication signal according to the first antenna 411 and the second communication signal according to the second antenna 412 have the same impedance (e.g., impedance value). As the electronic device 200 may perform communication on the basis of the first antenna 411 and the second antenna 412 which are arranged adjacent to each other, communication performance (e.g., radiation performance) may be improved.

In operation 605, the processor 420 may control the switch 415 to receive a communication signal on the basis of the third antenna 413 arranged in the first housing 410. For example, the third antenna 413 may be formed on the first substrate 251 arranged in the internal space of the first housing 410, and may be arranged to be spaced apart from the first antenna 411 and the second antenna 412 by a specified distance. For another example, the third antenna 413 may be arranged in a position that does not affect the communication performance of the communication signal on the basis of the first antenna 411 and the second antenna 412.

In operation 607, the processor 420 may adjust the impedance of each communication signal such that the first impedance corresponding to the first antenna 411 arranged in the first housing 410 matches the second impedance corresponding to the second antenna 412 arranged in the second housing 420. In operation 607, the processor 420 may adjust the impedance of the first communication signal and the second communication signal in response to the electronic device 200 being in a folded state such that the first impedance of the first communication signal corresponding to the first antenna 411 matches the second impedance of the second communication signal corresponding to the second antenna 412. According to one embodiment, when the first impedance of the first communication signal corresponding to the first antenna 411 matches the second impedance of the second communication signal corresponding to the second antenna 412, the first antenna 411 and the second antenna 412 may be integrated into one antenna and perform a transmission operation together.

According to one embodiment, when the electronic device 200 is in a folded state, the first antenna 411 and the second antenna 412 may be physically arranged adjacently, and when the first antenna 411 and the second antenna 412 are integrated into one antenna, the communication performance (e.g., radiation performance) of the communication signal may be improved. According to one embodiment, the processor 420 may adjust the impedance for the communication signal such that the first impedance corresponding to the first antenna 411 matches the second impedance corresponding to the second antenna 412, and may relatively improve the communication performance of the communication signal.

According to one embodiment, when the electronic device 200 is in an intermediate state, or in the unfolded state, the first antenna 411 and the second antenna 412 may be spaced apart from each other by a specified distance and the transmission and reception operations may be performed alternately. For example, when a transmission operation is performed on the basis of the first antenna 411, the second antenna 412 may perform a reception operation. When a reception operation is performed on the basis of the first antenna 411, the second antenna 412 may perform a transmission operation. According to one embodiment, the electronic device 200 may select an antenna that implements optimal communication performance according to the state of the electronic device 200 (e.g., folded state, unfolded state, intermediate state), and may perform transmission and reception operations using the selected antenna.

According to one embodiment, the electronic device 200 (e.g., the foldable electronic device) may select at least one antenna to implement optimal communication performance according to the state of the electronic device 200 (e.g., folded state, unfolded state, intermediate state), and may perform a communication operation on the basis of the at least one selected antenna. The electronic device 200 may provide an optimal communication service to the user according to the state of the electronic device 200 (e.g., folded state, unfolded state).

According to one embodiment, the electronic device 200 may include a grip sensor for detecting whether a user grips the electronic device 200. For example, the grip sensor may detect an electromagnetic change resulting from physical contact by the user. The grip sensor may be formed in at least one of the first housing 210 and the second housing 220 constituting the electronic device 200, and may detect whether the user's grip occurs in any of the first housing 210 and the second housing 220. According to one embodiment, the electronic device 200 may identify the posture, location, position, and grip shape of the electronic device 200 on the basis of the grip sensor and sensor module 562, and may adjust the amount of power supplied to a plurality of antennas on the basis of the identified posture, location, position, and grip shape of the electronic device 200. For example, when the electronic device 200 is held by a user and the speaker placed in the first housing 210 is physically positioned adjacent to the user's ear, the electronic device 200 may relatively reduce the amount of power supplied to the first antenna 411 included in the first housing 210. In this case, the electronic device 200 may relatively increase the amount of power supplied to the second antenna 412 included in the second housing 220. According to one embodiment, the electronic device 200 may adjust the amount of power supplied to the antenna such that electromagnetic waves generated through the antenna do not affect the human body. For example, in a situation where the antenna is close to the human body within a specified distance, the amount of power supplied to the antenna may be reduced and supplied.

According to one embodiment, the electronic device 200 (e.g., the foldable electronic device) may select at least one antenna to implement optimal communication performance according to the state (e.g., folded state, unfolded state, intermediate state) and the posture (e.g., location, position) of the electronic device 200, and may perform a communication operation on the basis of the at least one selected antenna. The electronic device 200 may provide an optimal communication service to the user by considering the state (e.g., folded state, unfolded state, intermediate state) and the posture of the electronic device 200.

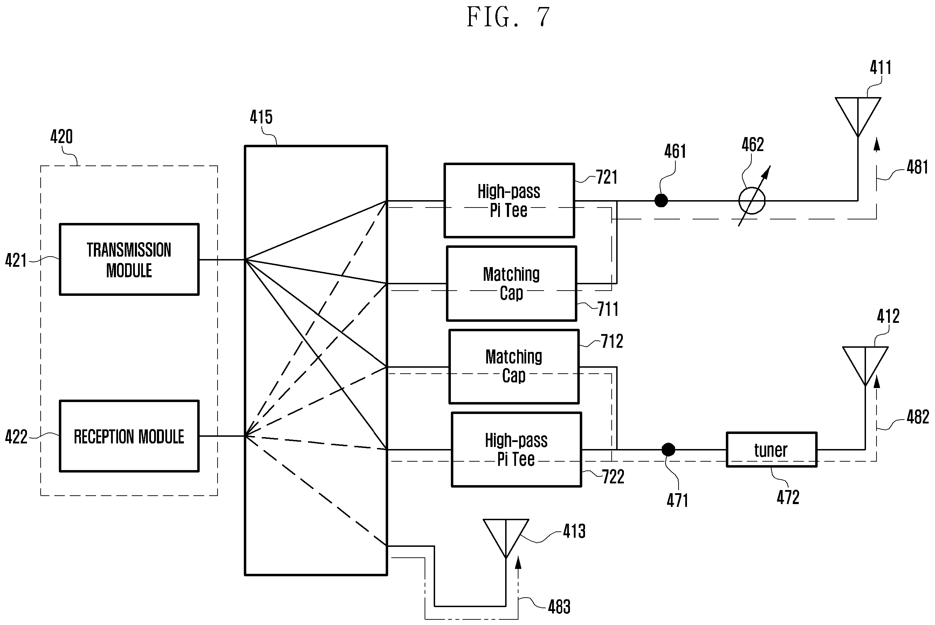

FIG. 7 is a circuit diagram illustrating a structure in which multiple antennas are operatively connected using a switch according to one embodiment of the present disclosure.

The electronic device 200 of FIG. 7 may be at least partially similar to the electronic device 101 of FIG. 1, the electronic device 200 of FIG. 2a, and/or the electronic device 200 of FIG. 5, or may further include other embodiments of the electronic device 101.

With reference to FIG. 7, the processor 420 (e.g., the processor 420 of FIG. 5) may include a transmission module 421 (e.g., the transmission module 421 of FIG. 5) and a reception module 422 (e.g., the reception module 422 of FIG. 5) and may be operatively connected to at least one antenna among a plurality of antennas (e.g., the first antenna 411, the second antenna 412, the third antenna 413) through the switch (e.g., the switch 415 of FIG. 5). The switch 415 may include a DP5T switch, the transmission module 421 may support two paths (e.g., a first path 481, a second path 482) electrically connectable to the first antenna 411 and the second antenna 412, and the reception module 422 may support three paths (e.g., a first path 481, a second path 482, a third path 483) electrically connectable to the first antenna 411, the second antenna 412, and the third antenna 413. For example, the switch 415 may be at least partially controlled on the basis of the transmission module 421 and the reception module 422.

With reference to FIG. 7, the transmission module 421 may be operatively connected to at least one of the first antenna 411 and the second antenna 412 through a switch 415. The reception module 422 may be operatively connected to at least one of the first antenna 411, the second antenna 412, and the third antenna 413 through a switch 415.

According to one embodiment, when the electronic device 200 is in an unfolded state, the processor 420 may control the switch 415 to alternately perform a transmission operation and a reception operation on the basis of the first antenna 411 and the second antenna 412. For example, when the transmission module 421 performs a transmission operation on the basis of the first antenna 411, the reception module 422 may perform a reception operation on the basis of the second antenna 412. For another example, when the transmission module 421 performs a transmission operation on the basis of the second antenna 412, the reception module 422 may perform a reception operation on the basis of the first antenna 411.

According to one embodiment, when the electronic device 200 is in a folded state, the processor 420 may control the switch 415 to perform a transmission operation by integrating the first antenna 411 and the second antenna 412. For example, the transmission module 421 may control the switch 415 to be operatively connected to the first antenna 411 and the second antenna 412. When the electronic device 200 is in a folded state, the reception module 422 may control the switch 415 to perform a reception operation using the third antenna 413.

With reference to FIG. 7, a first path 481 toward a first antenna 411 through a switch 415 and a second path 482 toward a second antenna 412 through the switch 415 may each include a component (e.g., a port, a 1-1 port 721, a 1-2 port 722) that forms a communication signal of a configured frequency band (e.g., a first frequency band). For example, the 1-1 port 721 and the 1-2 port 722 may include Highpass Pi Tee, and may form a communication signal having $\sqrt{2Z0}$ impedance. The 1-1 port 721 included in the first path may be arranged in parallel with the 2-1 port 711, and the 1-2 port 722 included in the second path may be arranged in parallel with the 2-2 port 712. For example, the 2-1 port 711 and the 2-2 port 712 may lower the impedance of the communication signal and match with √2Z0. For example, the impedance of the 2-1 port 711 may be adjusted to match the communication signal formed on the basis of the 1-1 port 721. The 2-1 port 711 and the 2-2 port 712 may include a capacitor (capacitor, matching capacitor) for matching the impedance of the communication signal.

According to one embodiment, the 1-1 port 721 and the 1-2 port 722 may be implemented on the basis of at least one capacitor C and at least one inductor L. The 1-1 port 721 and the 1-2 port 722 may use the following mathematical formula 1 and mathematical formula 2 in forming a communication signal having an impedance of √2Z0.

[Mathematical formula 1]

$$C: \frac{1}{w0\sqrt{2Z0}\sin|\varphi|}$$

[Mathematical formula 2]

$$L: \frac{\sqrt{2}Z0}{w0\tan|\varphi/2|}$$

With reference to mathematical formula 1 and mathematical formula 2, the first transmission signal according to the first path 481 and the second transmission signal according to the second path 482 may be corrected to have the same impedance value (e.g., √2Z0) on the basis of mathematical formula 1 and mathematical 2.

With reference to FIG. 7, the first path 481 may include a first RF switch 461 and a phase shifter 462, and the second path 482 may include a second RF switch 471 and a filter 472 (e.g., a tuner). For example, the first RF switch 461 and the second RF switch 471 may compensate for performance degradation because of movement of the communication signal. The phase shifter 462 included in the first path 481 may compensate for the phase of the communication signal. With reference to 4, the second path 482 may be connected to the second antenna 412 along the second substrate 252 through the connecting member (e.g., the connecting member 441 of FIG. 4). According to one embodiment, the first communication signal according to the first path 481 may not pass through the connecting member 441, and therefore, the phase value may have a relatively larger fluctuation range than the second communication signal according to the second path 482. The first communication signal may be compensated for the phase value on the basis of the phase converter 462 included in the first path 481.

According to one embodiment, when the first antenna 411 and the second antenna 412 are operatively connected together to the transmission module 421, the 1-1 port 721 and the 1-2 port 722 may be matched in parallel and may perform the function of distributing or combining power according to the transmission operation.

According to one embodiment, when the first antenna 411 and the second antenna 412 are operatively connected together to the transmission module 421, the first communication signal according to the first path 481 may have its impedance adjusted on the basis of the 1-1 port 721, and the second communication signal according to the second path 482 may have its impedance adjusted on the basis of the 1-2 port 722. In this case, the first communication signal and the second communication signal may be compensated to have substantially the same impedance value. In this case, 2-1 port 711 and 2-2 port 712 may be deactivated or have their connections blocked.

According to one embodiment, when the electronic device 200 operates in a folded state, the first antenna 411 and the second antenna 412 may be physically arranged adjacently, and the impedances of the first transmission signal and the second transmission signal may be adjusted such that the first transmission signal according to the first path 481 and the second transmission signal according to the second path 482 have substantially the same impedance.

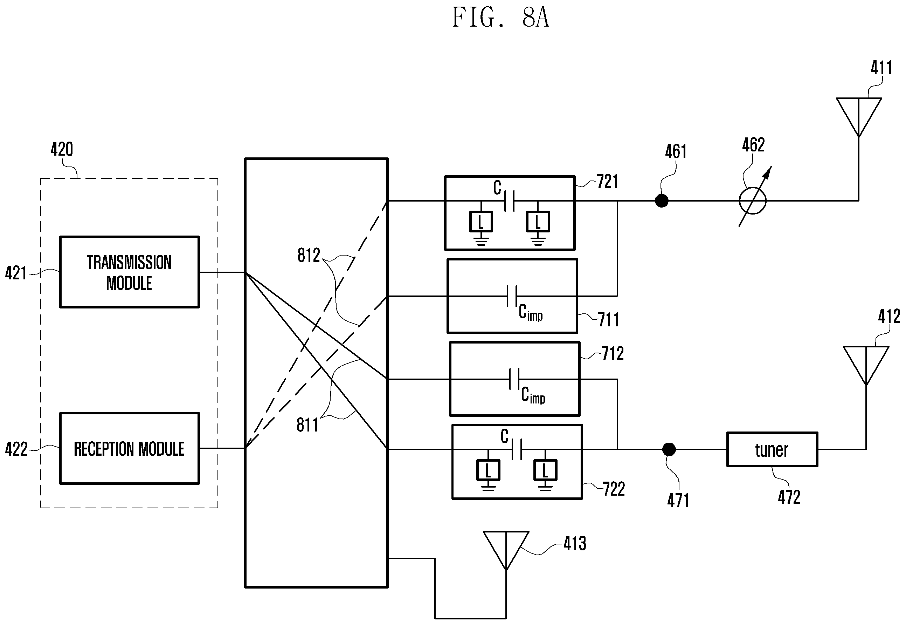

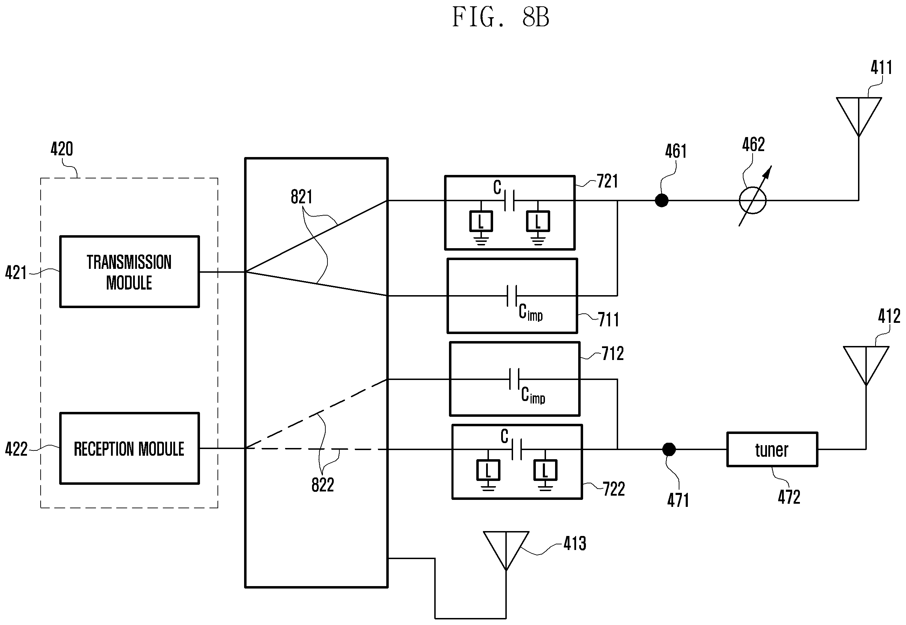

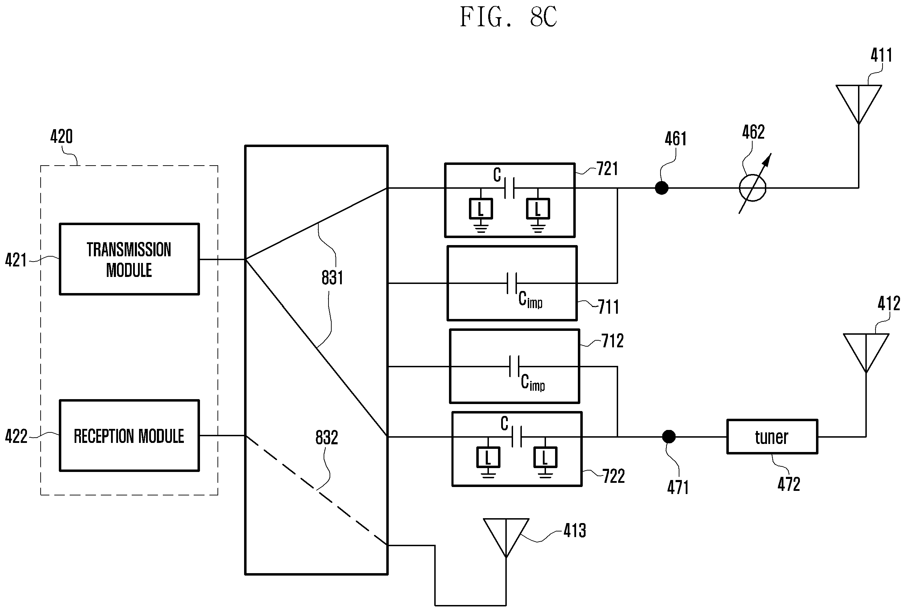

FIG. 8a is a first circuit diagram in which reception operation on the basis of a first antenna and transmission operation on the basis of a second antenna are performed when the electronic device according to one embodiment of the present disclosure is in an unfolded state. FIG. 8b is a second circuit diagram in which transmission operation on the basis of a first antenna and reception operation on the basis of a second antenna are performed when the electronic device according to one embodiment of the present disclosure is in an unfolded state. FIG. 8c is a third circuit diagram in which transmission operation on the basis of a first antenna and a second antenna and reception operation on the basis of a third antenna are performed when the electronic device according to one embodiment of the present disclosure is in a folded state.

The electronic device 200 of FIGS. 8a to 8c may be at least partially similar to the electronic device 101 of FIG. 1, the electronic device 200 of FIG. 2a, and/or the electronic device 200 of FIG. 5, or may include other embodiments of the electronic device 101.

FIG. 8a illustrates a transmission path 811 in which a transmission module 421 is connected to a second antenna 412 and a reception path 812 in which a reception module 422 is connected to a first antenna 411, on the basis of the circuit diagram illustrated in FIG. 7. According to one embodiment, when the electronic device 200 is in an unfolded state, the processor 420 may control a switch 415 to operatively connect the transmission module 421 to the second antenna 412, and may control the switch 415 to operatively connect the reception module 422 to the first antenna 411.

FIG. 8b illustrates a transmission path 821 in which a transmission module 421 is connected to a first antenna 411 and a reception path 822 in which a reception module 422 is connected to a second antenna 412, on the basis of the circuit diagram illustrated in FIG. 7. According to one embodiment, when the electronic device 200 is in an unfolded state, the processor 420 may control a switch 415 to operatively connect the transmission module 421 to the first antenna 411, and may control the switch 415 to operatively connect the reception module 422 to the second antenna 412.

With reference to FIG. FIGS. 8a and 8b, when the electronic device 200 is in an unfolded state, the switch 415 may be controlled such that a transmission operation and a reception operation are performed alternately on the basis of the first antenna 411 and the second antenna 412.

FIG. 8c illustrates a transmission path 831 in which a transmission module 421 is operatively connected to a first antenna 411 and a second antenna 412, and a reception path 832 in which a reception module 422 is operatively connected to a third antenna 413, on the basis of the circuit diagram illustrated in FIG.

7. According to one embodiment, when the electronic device 200 is in a folded state, the processor 420 may control a switch 415 to operatively connect the transmission module 421 to the first antenna 411 and the second antenna 412, and may control the switch 415 to operatively connect the reception module 422 to the third antenna 413.

According to one embodiment, the electronic device 200 (e.g., the foldable electronic device) may select at least one antenna to implement optimal communication performance according to the state of the electronic device 200 (e.g., folded state, unfolded state, intermediate state), and may perform a communication operation on the basis of the at least one selected antenna. The electronic device 200 may provide an optimal communication service to the user according to the state of the electronic device 200 (e.g., folded state, unfolded state).

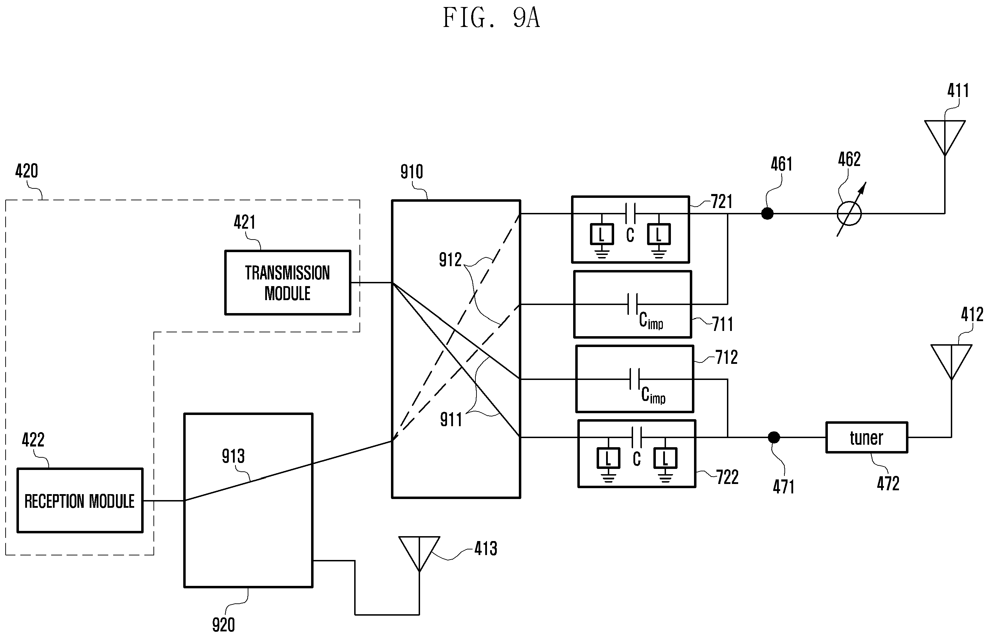

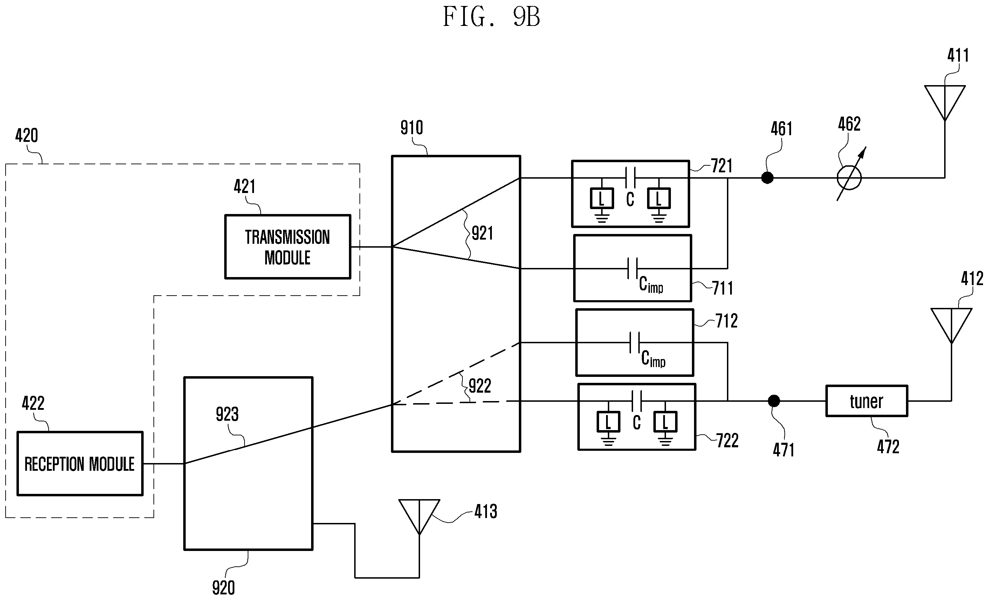

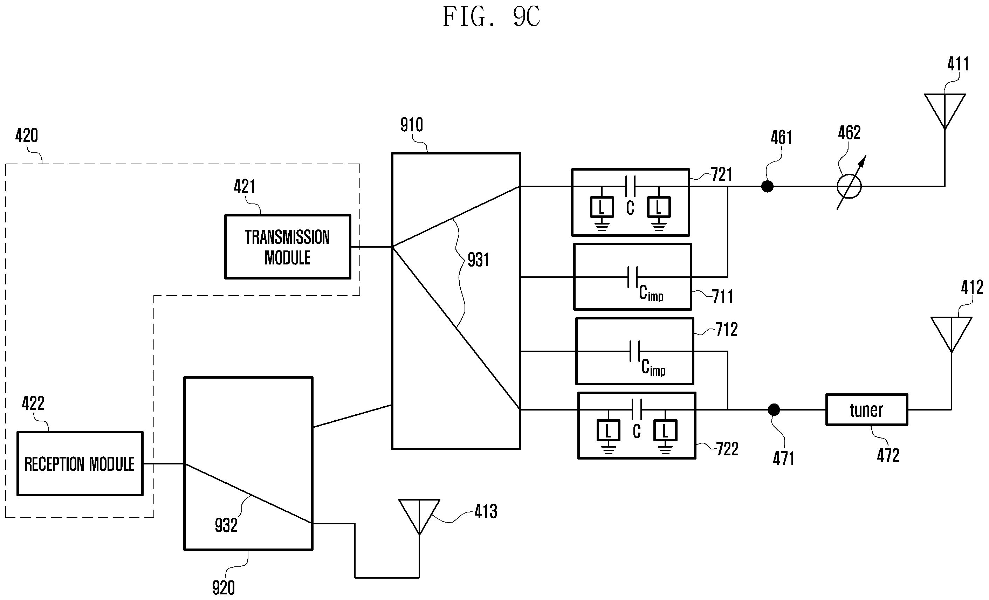

FIG. 9a is a first circuit diagram in which reception operation on the basis of a first antenna and transmission operation on the basis of a second antenna using a plurality of switches are performed when the electronic device according to one embodiment of the present disclosure is in an unfolded state. FIG. 9b is a second circuit diagram in which transmission operation on the basis of a first antenna and reception operation on the basis of a second antenna using a plurality of switches are performed when the electronic device according to one embodiment of the present disclosure is in an unfolded state. FIG. 9c is a third circuit diagram in which transmission operation on the basis of a first antenna and a second antenna and reception operation on the basis of a third antenna using a plurality of switches are performed when the electronic device according to one embodiment of the present disclosure is in a folded state.

The electronic device 200 of FIGS. 9a to 9c may be at least partially similar to the electronic device 101 of FIG. 1, the electronic device 200 of FIG. 2a, and/or the electronic device 200 of FIG. 5, or may further include other embodiments of the electronic device 101.

The circuit diagrams of FIGS. 9a to 9c differ from the circuit diagrams of FIGS. 8a to 8c in that they include multiple switches (e.g., a first switch 910, a second switch 920).

FIG. 9a, on the basis of the circuit diagram illustrated in FIG. 7, illustrates a transmission path 911 connecting the transmission module 421 to the second antenna 412 through the first switch 910, and a reception path 912 and 913 connecting the reception module 422 to the first antenna 411 through the first switch 910 and the second switch 920. According to one embodiment, when the electronic device 200 is in the unfolded state, the processor 420 may control the first switch 910 such that the transmission module 421 is operatively connected to the second antenna 412 and may control the first switch 910 and the second switch 920 such that the receiving module 422 is operatively connected to the first antenna 411.

FIG. 9b, on the basis of the circuit diagram illustrated in FIG. 7, illustrates a transmission path 921 connecting the transmission module 421 to the first antenna 411 through the first switch 910, and a reception path 922 and 923 connecting the reception module 422 to the second antenna 412 through the first switch 910 and the second switch 920. According to one embodiment, when the electronic device 200 is in the unfolded state, the processor 420 may control the first switch 910 such that the transmission module 421 is operatively connected to the first antenna 411 and may control the first switch 910 and the second switch 920 such that the receiving module 422 is operatively connected to the second antenna 412.

With reference to FIG. 9a and FIG. 9b, when the electronic device 200 is in an unfolded state, the first switch 910 and the second switch 920 may be controlled such that a transmission operation and a reception operation are performed alternately on the basis of the first antenna 411 and the second antenna 412.

FIG. 9c, on the basis of the circuit diagram illustrated in FIG. 7, illustrates a transmission path 931 connecting the transmission module 421 to the first antenna 411 and the second antenna 412 together through the first switch 910, and a reception path 932 connecting the reception module 422 to the third antenna 413 through the second switch 920. According to one embodiment, when the electronic device 200 is in the folded state, the processor 420 may control the first switch 910 such that the transmission module 421 is operatively connected to the first antenna 411 and the second antenna 412 and may control the second switch 920 such that the receiving module 422 is operatively connected to the third antenna 413.

According to one embodiment, the electronic device 200 (e.g., the foldable electronic device) may select at least one antenna using at least one switch (e.g., the first switch 910, the second switch 920) to implement optimal communication performance depending on the state of the electronic device 200 (e.g., folded state, unfolded state, intermediate state) and may perform a communication operation on the basis of the at least one selected antenna. For example, in response to the electronic device 200 being in a folded state, the processor 420 may control the switch such that a transmission operation is performed on the basis of the first antenna 411 and the second antenna 412, and may control the switch such that a reception operation is performed on the basis of the third antenna 413. The electronic device 200 may provide an optimal communication service to a user depending on the state of the electronic device 200 (e.g., folded state, unfolded state).

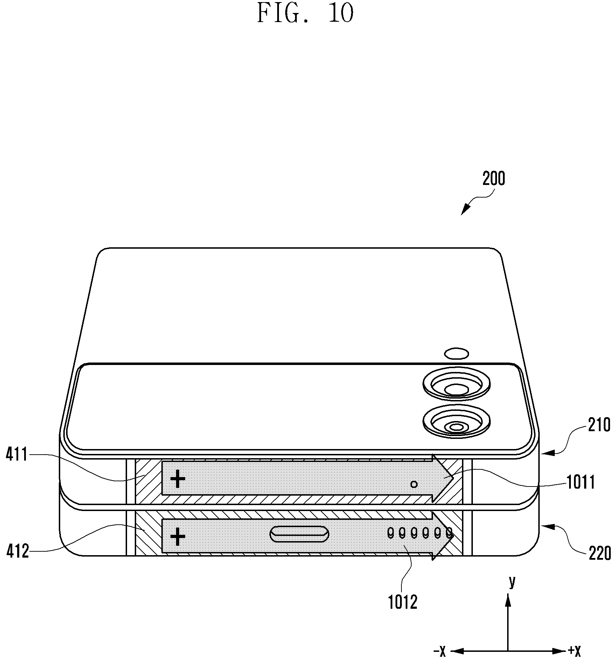

FIG. 10 is an example diagram illustrating the current flow when the electronic device according to one embodiment of the present disclosure is in a folded state in a situation where the first impedance corresponding to the first antenna matches the second impedance corresponding to the second antenna.

The electronic device 200 of FIG. 10 may be at least partially similar to the electronic device 101 of FIG. 1, the electronic device 200 of FIG. 2a, and/or the electronic device 200 of FIG. 5, or further include other embodiments of the electronic device 101.

With reference to FIG. 10, the electronic device 200 may include a first housing 210 (e.g., the first housing 210 of FIG. 2a), a first antenna 411 (e.g., the first antenna 411 of FIG. 4) and a third antenna 413 (e.g., the third antenna of FIG. 4) arranged in the internal space of the first housing 210, a second housing (e.g., the second housing of FIG. 2a), a second antenna 412 (e.g., the second antenna 412 of FIG. 4) arranged in the internal space of the second housing 220, and a hinge device (e.g., the hinge device 240 of FIG. 2) with the first housing 210 and the second housing 220 being foldably connected each other with respect to the folding axis (e.g., the F of FIG. 2a). FIG. 10 illustrates an electronic device 200 in a folded state.

According to one embodiment, when the electronic device 200 is in a folded state, the first antenna 411 and the second antenna 412 may be physically arranged adjacent to the processor 420, and the processor 420 may control the switch 415 so as to perform a transmission operation by integrating the first antenna 411 and the second antenna 412 into one antenna. According to one embodiment, the processor 420 may control the switch 415 such that, when performing the communication operation by integrating the first antenna 411 and the second antenna 412, the transmission module 421 can be operatively connected to the first antenna 411 and the second antenna 412 together. The processor 420 may control the impedance such that the first impedance corresponding to the first antenna 411 matches the second impedance corresponding to the second antenna 412. The processor 420 may adjust the phase of the current such that the current supplied to the first antenna 411 and the current supplied to the second antenna 412 flow along the same direction 1011 and 1012. For example, the processor 420 may adjust the phase of the first communication signal corresponding to the first antenna 411 on the basis of the phase shifter (e.g., the phase shifter 462 of FIG. 7) arranged adjacent to the first antenna 411. According to one embodiment, performing a single communication operation (e.g., a transmission operation) on the basis of a plurality of antennas (e.g., the first antenna 411 and the second antenna 412) may improve the communication performance (e.g., radiation performance) associated with the transmission operation.

A method for controlling communication signal in a foldable electronic device according to various embodiments may include: identifying a first state of a first housing 210 and a second housing 220 constituting the foldable electronic device 200; in the response to the identification of the first state, controlling the switch 415 such that a communication signal is transmitted on the basis of a first antenna 411 arranged in an internal space of the first housing 210 and a second antenna 412 symmetrically arranged at the position of the first antenna 411 in an internal space of the second housing 220; controlling the switch 415 such that a communication signal is received on the basis of a third antenna 413 arranged to have a radiation direction different from the radiation direction of the first antenna 411 in an internal space of the first housing 210; and performing adjustment such that a first impedance of a first transmission signal transmitted through the first antenna 411 matches a second impedance of a second transmission signal transmitted through the second antenna 412.

The method according to one embodiment may further include transmitting the first transmission signal and the second transmission signal of which the impedance is corrected on the basis of a configured frequency band.

According to one embodiment, the operation of adjusting the first impedance and the second impedance may include adjusting the first impedance for the first transmission signal transmitted through the first antenna 411 on the basis of at least one capacitor and at least one inductor arranged between the switch 415 and the first antenna 411 and may include adjusting the second impedance for the second transmission signal transmitted through the second antenna 412 on the basis of at least one capacitor and at least one inductor arranged between the switch 415 and the second antenna 412.

The method according to one embodiment may further include adjusting the phase of the first transmission signal transmitted through the first antenna 411 on the basis of the second transmission signal transmitted through the second antenna 412 using a phase shifter 462 arranged between the first antenna 411 and the switch 415.

The method according to one embodiment may further include adjusting the RF power of a second transmission signal corresponding to the second antenna 412 on the basis of a first transmission signal corresponding to the first antenna 411 using a filter 472 arranged between the second antenna 412 and the switch 415.

The method according to one embodiment may further include identifying a second state for the first housing 210 and the second housing 220 using the sensor 562, selecting at least one antenna among the first antenna 411 and the second antenna 412 in response to identification of the second state, and controlling the switch 415 such that the communication signal is transmitted on the basis of the at least one selected antenna.

The method according to one embodiment may further include transmitting a communication signal on the basis of the first antenna 411, the second antenna 412 and the processor 420, on the basis of the first switch 910 electrically connecting the first antenna 411, the second antenna 412 and the processor 420, and receiving a communication signal on the basis of the third antenna 413, on the basis of a second switch 920 electrically connecting the third antenna 413 and the processor 420.

According to one embodiment, a non-transitory computer-readable storage medium (or computer program product) may be described for storing one or more programs for executing a method of controlling communication signals in a foldable electronic device. According to one embodiment, one or more programs, when executed by a processor 420 of an electronic device 200, may include instructions to perform: identifying a first state of a first housing 210 and a second housing 220 constituting the foldable electronic device 200; in the response to the identification of the first state, controlling the switch 415 such that a communication signal is transmitted on the basis of a first antenna 411 arranged in an internal space of the first housing 210 and a second antenna 412 symmetrically arranged at the position of the first antenna 411 in an internal space of the second housing 220; controlling the switch 415 such that a communication signal is received on the basis of a third antenna 413 arranged to have a radiation direction different from the radiation direction of the first antenna 411 in an internal space of the first housing 210; and performing adjustment such that a first impedance of a first transmission signal transmitted through the first antenna 411 matches a second impedance of a second transmission signal transmitted through the second antenna 412.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. It is intended that features described with respect to separate embodiments, or features recited in separate claims, may be combined unless such a combination is explicitly specified as being excluded or such features are incompatible. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. A foldable electronic device 200 comprising:

   a first housing 210 and a first antenna 411 arranged in an internal space of the first housing 210;
   a second housing 220 and a second antenna 412 symmetrically arranged at the position of the first antenna 411 in an internal space of the second housing 220;
   a third antenna 413 arranged to have a radiation direction different from the radiation direction of the fist antenna 411 in the internal space of the first housing 210;
   a hinge device 240 connecting the first housing 210 and the second housing 220 such that folding on a folding axis is possible;
   a sensor 562 for detecting a first state or a second state for the first housing 210 and the second housing 220;
   a switch 415 electrically connected to the first antenna 411, the second antenna 412 and the third antenna 413;
   a processor 420 operatively connected to the sensor 562 and the switch 415; and
   a memory 130 for storing instructions, wherein the instructions, when executed by the processor 420, can cause the foldable electronic device 200 to:

   identify the first state for the first housing 210 and the second housing 220 by using the sensor 562;
   in response to the identification of the first state, control the switch 415 such that a communication signal is transmitted on the basis of the first antenna 411 and the second antenna 412;
   control the switch 415 such that a communication signal is received on the basis of the third antenna 413; and
   perform adjustment such that a first impedance of a first transmission signal transmitted through the first antenna 411 matches a second impedance of a second transmission signal transmitted through the second antenna 412.

2. The foldable electronic device of claim 1, wherein the instructions, when executed by the processor 420, cause the foldable electronic device 200 to transmit the first transmission signal and the second transmission signal of which the impedance is corrected on the basis of the configured frequency band.

3. The foldable electronic device of claim 1, further comprising at least one capacitor and at least one inductor arranged between the switch 415 and the first antenna 411, wherein the instructions, when executed by the processor 420, cause the foldable electronic device 200 to adjust the first impedance for the first transmission signal transmitted through the first antenna 411 on the basis of the at least one capacitor and the at least one inductor.

4. The foldable electronic device of claim 1, further comprising at least one capacitor and at least one inductor arranged between the switch 415 and the second antenna 412, wherein the instructions, when executed by the processor 420, cause the foldable electronic device 200 to adjust the second impedance for the second transmission signal transmitted through the second antenna 412 on the basis of the at least one capacitor and the at least one inductor.

5. The foldable electronic device of claim 1, further comprising the phase shifter 462 arranged between the first antenna 411 and the switch 415, wherein the instructions, when executed by the processor 420, cause the foldable electronic device 200 to adjust the phase of the first transmission signal transmitted through the first antenna 411 on the basis of the second transmission signal transmitted through the second antenna 412 using the phase shifter 462.

6. The foldable electronic device of claim 1, further comprising the filter 472 arranged between the second antenna 411 and the switch 415, wherein

the instructions, when executed by the processor 420, cause the foldable electronic device 200 to adjust the RF power of the second transmission signal transmitted through the second antenna 412 on the basis of the first transmission signal transmitted through the first antenna 411 using the filter 472.

7. The foldable electronic device of claim 1, wherein the instructions, when executed by the processor 420, cause the foldable electronic device 200 to:

identify the second state for the first housing and the second housing using the sensor 562;
in response to the second state, select at least one of the first antenna 411 and the second antenna 412; and
control the switch 415 such that the communication signal is transmitted on the basis of the at least one selected antenna.

8. The foldable electronic device of claim 7, further comprising a grip sensor for detecting whether a user grips the foldable electronic device 200 wherein the instructions, when executed by the processor 420, cause the foldable electronic device 200 to:

identify the posture of the electronic device 200 on the basis of the grip sensor and the sensor 562; and
adjust the amount of power supplied to at least one of the first antenna 411 and the second antenna 412 on the basis of the identified posture.

9. The foldable electronic device of claim 1, further comprising:

the first switch 910 electrically connecting the first antenna 411, the second antenna 412 and the processor 420; and
the second switch 920 electrically connecting the third antenna 413 and the processor 420, wherein
the instructions, when executed by the processor 420, cause the foldable electronic device 200 to:

control the first switch 910 such that the communication signal is transmitted on the basis of the first antenna 411 and the second antenna 412; and
control the second switch 920 such that the communication signal is transmitted on the basis of the third antenna 413.

10. The foldable electronic device of claim 1, wherein the switch 415 is positioned within the internal space of the first housing 411 such that the power loss of the first communication signal transmitted through the first antenna 411 matches the power loss of the second communication signal transmitted through the second antenna 412, and the distance from the third antenna 413 is within a specified distance.

11. The foldable electronic device of claim 1, further comprising:

a first RF filter 461 arranged adjacently within a specified distance on the basis of the position of the first antenna 411; and
a second RF filter 471 arranged adjacently within a specified distance on the basis of the position of the second antenna 412, wherein
the instructions, when executed by the processor 420, cause to:

identify the first RF power for the first communication signal transmitted through the first antenna 411 on the basis of the first filter 461; and
identify the second RF power for the second communication signal transmitted through the second antenna 412 on the basis of the second filter 471.

12. The foldable electronic device of claim 1, wherein

the first state comprises a folded state in which the first housing 210 and the second housing 220 are completely folded relative to each other with respect to the folding axis, and
the second state comprises an unfolded state or an intermediate state in which the first housing 210 and the second housing 220 are not completely folded relative to each other.

13. A method for controlling a communication signal in a foldable electronic device, the method comprising:

identifying a first state for the first housing 210 and the second housing 220 constituting a foldable electronic device 200;
in response to the identification of the first state, controlling a switch 415 such that a communication signal is transmitted on the basis of a first antenna 411 arranged in an internal space of a first housing 210 and a second antenna 412 arranged symmetrically to the position of the first antenna 411 in an internal space of the second housing 220;
controlling the switch 415 such that a communication signal is received on the basis of a third antenna 413 arranged to have a different radiation direction from the radiation direction of the first antenna 411 in the internal space of the first housing 210; and

performing adjustment such that a first impedance of a first transmission signal transmitted through a first antenna 411 matches a second impedance of a second transmission signal transmitted through a second antenna 412.

14. The method of claim 13, wherein the operation of adjusting the first impedance and the second impedance comprises:

adjusting the first impedance for the first transmission signal transmitted through the first antenna 411 on the basis of at least one capacitor and at least one inductor arranged between the switch 415 and the first antenna 411; and adjusting the second impedance for the second transmission signal transmitted through the second antenna 412 on the basis of at least one capacitor and at least one inductor arranged between the switch 415 and the second antenna 412.

15. In a non-transitory computer-readable storage medium storing one or more programs for executing a method of controlling communication signals in a foldable electronic device, one or more programs, when executed by a processor 420 of an electronic device 200, comprising:

identifying a first state of a first housing 210 and a second housing 220 constituting the foldable electronic device 200; in the response to the identification of the first state, controlling the switch 415 such that a communication signal is transmitted on the basis of a first antenna 411 arranged in an internal space of the first housing 210 and a second antenna 412 symmetrically arranged at the position of the first antenna 411 in the internal space of the second housing 220; controlling the switch 415 such that a communication signal is received on the basis of a third antenna 413 arranged to have a radiation direction different from the radiation direction of the first antenna 411 in the internal space of the first housing 210; and performing adjustment such that a first impedance of a first transmission signal transmitted through the first antenna 411 matches a second impedance of a second transmission signal transmitted through the second antenna 412.

# FIG. 1

**ELECTRONIC DEVICE** 101 / 100

- INPUT MODULE 150
- SOUND OUTPUT MODULE 155
- BATTERY 189
- POWER MANAGEMENT MODULE 188
- DISPLAY MODULE 160

**MEMORY** 130
- VOLATILE MEMORY 132
- NON-VOLATILE MEMORY 134
  - INTERNAL MEMORY 136
  - EXTERNAL MEMORY 138

**PROCESSOR** 120
- MAIN PROCESSOR 121
- AUXILIARY PROCESSOR 123

**COMMUNICATION MODULE** 190
- WIRELESS COMMUNICATION MODULE 192
- WIRED COMMUNICATION MODULE 194

- SUBSCRIBER IDENTIFICATION MODULE 196
- ANTENNA MODULE 197

- AUDIO MODULE 170
- SENSOR MODULE 176
- INTERFACE 177
- HAPTIC MODULE 179
- CAMERA MODULE 180
- CONNECTION TERMINAL 178

**PROGRAM** 140
- APPLICATION 146
- MIDDLEWARE 144
- OPERATING SYSTEM 142

SECOND NETWORK 199

ELECTRONIC DEVICE 104

FIRST NETWORK 198

ELECTRONIC DEVICE 102

SERVER 108

EP 4 783 470 A1

26

# FIG. 2A

# FIG. 2B

# FIG. 2C

# FIG. 3A

# FIG. 3B

FIG. 4

## FIG. 5

# FIG. 6

```
                    START
                      |
                      v
+-------------------------------------------------+
| IDENTIFYING A FOLDING STATE FOR A FIRST HOUSING |  ~601
| AND A SECOND HOUSING                            |
+-------------------------------------------------+
                      |
                      v
+-------------------------------------------------+
| CONTROLLING THE SWITCH SUCH THAT A COMMUNICATION|  ~603
| SIGNAL IS TRANSMITTED ON THE BASIS OF THE FIRST |
| ANTENNA AND THE SECOND ANTENNA                  |
+-------------------------------------------------+
                      |
                      v
+-------------------------------------------------+
| CONTROLLING THE SWITCH 415 SUCH THAT A          |  ~605
| COMMUNICATION SIGNAL IS RECEIVED ON THE BASIS OF|
| THE THIRD ANTENNA ARRANGED IN THE FIRST HOUSING |
+-------------------------------------------------+
                      |
                      v
+-------------------------------------------------+
| PERFORMING ADJUSTMENT SUCH THAT THE FIRST       |
| IMPEDANCE CORRESPONDING TO THE FIRST ANTENNA    |  ~607
| ARRANGED IN THE FIRST HOUSING MATCHES THE       |
| SECOND IMPEDANCE CORRESPONDING TO THE SECOND    |
| ANTENNA ARRANGED IN THE SECOND HOUSING          |
+-------------------------------------------------+
                      |
                      v
                     END
```

FIG. 7

EP 4 783 470 A1

FIG. 8A

EP 4 783 470 A1

# FIG. 8B

EP 4 783 470 A1

# FIG. 8C

EP 4 783 470 A1

FIG. 9A

FIG. 9B

EP 4 783 470 A1

FIG. 9C

# FIG. 10

# EP 4 783 470 A1

## INTERNATIONAL SEARCH REPORT

International application No.

**PCT/KR2024/014465**

### A. CLASSIFICATION OF SUBJECT MATTER

**H04B 1/401**(2015.01)i; **H04B 1/44**(2006.01)i; **H04B 1/04**(2006.01)i; **H04B 7/06**(2006.01)i; **H04M 1/02**(2006.01)i; **G06F 1/16**(2006.01)i

According to International Patent Classification (IPC) or to both national classification and IPC

### B. FIELDS SEARCHED

Minimum documentation searched (classification system followed by classification symbols)

H04B 1/401(2015.01); H01Q 1/24(2006.01); H01Q 1/38(2006.01); H01Q 21/28(2006.01); H01Q 21/29(2006.01); H04B 1/40(2006.01); H04B 17/10(2015.01); H04M 1/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 플렉서블(flexible), 디스플레이(display), 폴딩(folding), 상태(status), 안테나 (antenna), 스위칭(switching), 임피던스(impedance)

### C. DOCUMENTS CONSIDERED TO BE RELEVANT

| Category* | Citation of document, with indication, where appropriate, of the relevant passages | Relevant to claim No. |
|---|---|---|
| Y | KR 10-2022-0109069 A (SAMSUNG ELECTRONICS CO., LTD.) 04 August 2022 (2022-08-04)<br>See paragraphs [0023]-[0201]. | 1-15 |
| Y | KR 10-2021-0067675 A (SAMSUNG ELECTRONICS CO., LTD.) 08 June 2021 (2021-06-08)<br>See paragraphs [0083]-[0086]. | 1-15 |
| Y | KR 10-2022-0126057 A (SAMSUNG ELECTRONICS CO., LTD.) 15 September 2022 (2022-09-15)<br>See paragraphs [0047]-[0186]. | 5-6,8 |
| Y | KR 10-2021-0130063 A (SAMSUNG ELECTRONICS CO., LTD.) 29 October 2021 (2021-10-29)<br>See paragraphs [0067]-[0347]. | 11 |
| A | US 2023-0126224 A1 (SAMSUNG ELECTRONICS CO., LTD.) 27 April 2023 (2023-04-27)<br>See claims 1-24. | 1-15 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 December 2024** | **24 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 783 470 A1

**INTERNATIONAL SEARCH REPORT**
**Information on patent family members**

| Patent document cited in search report | | | Publication date (day/month/year) | Patent family member(s) | | | Publication date (day/month/year) |
|---|---|---|---|---|---|---|---|
| KR | 10-2022-0109069 | A | 04 August 2022 | US | 2023-0344112 | A1 | 26 October 2023 |
| | | | | WO | 2022-164018 | A1 | 04 August 2022 |
| KR | 10-2021-0067675 | A | 08 June 2021 | WO | 2021-107606 | A1 | 03 June 2021 |
| KR | 10-2022-0126057 | A | 15 September 2022 | CN | 116982264 | A | 31 October 2023 |
| | | | | EP | 4270798 | A1 | 01 November 2023 |
| | | | | US | 2022-0286980 | A1 | 08 September 2022 |
| | | | | WO | 2022-191523 | A1 | 15 September 2022 |
| KR | 10-2021-0130063 | A | 29 October 2021 | WO | 2021-215714 | A1 | 28 October 2021 |
| US | 2023-0126224 | A1 | 27 April 2023 | KR | 10-2023-0059589 | A | 03 May 2023 |
| | | | | WO | 2023-075424 | A1 | 04 May 2023 |